# EUROPEAN PATENT APPLICATION

(11) **EP 4 529 309 A1**
(43) Date of publication of application: **26.03.2025**
(21) Application number: 24785241.1
(22) Date of filing: 04.04.2024
(51) Int. Cl.: H04W 64/00, H04W 52/02, H04L 5/00, G01S 5/00, H04W 24/08, H04W 4/029

(54) **METHOD AND APPARATUS FOR CONFIGURING TRANSMISSION OF SOUNDING REFERENCE SIGNAL FOR ESTIMATING LOCATION OF INACTIVE TERMINAL IN WIRELESS COMMUNICATION SYSTEM**

(30) Priority: 06.04.2023 KR 20230045620
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); BAE, Beomsik, Suwon-si, Gyeonggi-do 16677 (KR); HWANG, June, Suwon-si, Gyeonggi-do 16677 (KR)
(74) Representative: Gulde & Partner
(86) International application number: PCT/KR2024/004383
(87) International publication number: WO 2024/210540

(57) **Abstract**

The disclosure relates to a 5G or 6G communication system for supporting higher data transmission rates. A method performed by a terminal in a wireless communication system is provided. The method includes: receiving a radio resource control (RRC) release message related to an RRC inactive state, including sounding reference signal (SRS) configuration information for positioning provided in a pre-configured type; identifying an event requiring activation of the SRS configuration information for positioning; and transmitting an RRC resume request message to a base station configured to operate a cell belonging to a validity area for the SRS configuration information for positioning.

## Description

### [Technical Field]

The disclosure relates to operations of a UE and a gNB in a wireless communication system. More specifically, the disclosure relates to a method and an apparatus for providing a service of positioning a UE in an inactive state in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The disclosure proposes a method for configuring a sounding reference signal (SRS) efficiently. In addition, the disclosure proposes a method for configuring SRS transmission by a UE such that a UE in an inactive state can be positioned more efficiently in a wireless communication system.

### [Technical Solution]

In accordance with an embodiment of the disclosure, a method performed by a terminal in a wireless communication system is provided. The method includes: receiving a radio resource control (RRC) release message related to an RRC inactive state, including sounding reference signal (SRS) configuration information for positioning provided in a pre-configured type; identifying an event requiring activation of the SRS configuration information for positioning; and transmitting an RRC resume request message, to a base station configured to operate a cell belonging to a validity area for the SRS configuration information for positioning.

In accordance with an embodiment of the disclosure, a method performed by a base station in a wireless communication system is provided. The method includes: transmitting a radio resource control (RRC) release message related to an RRC inactive state, including sounding reference signal (SRS) configuration information for positioning provided in a pre-configured type; and in case that an event requiring activation of the SRS configuration information for positioning occurs to a terminal, and in case that the base station is configured to operate a cell belonging to a validity area for the SRS configuration information for positioning, receiving an RRC resume request message from the terminal.

In accordance with an embodiment of the disclosure, a terminal in a wireless communication system is provided. The terminal includes a transceiver and a controller coupled to the transceiver. The controller is configured to: receive, via the transceiver, a radio resource control (RRC) release message related to an RRC inactive state, including sounding reference signal (SRS) configuration information for positioning provided in a pre-configured type; identify an event requiring activation of the SRS configuration information for positioning; and transmit, via the transceiver, an RRC resume request message to, a base station configured to operate a cell belonging to a validity area for the SRS configuration information for positioning.

In accordance with an embodiment of the disclosure, a base station in a wireless communication system is provided. The base station includes a transceiver and a controller coupled to the transceiver. The controller is configured to: transmit, via the transceiver, a radio resource control (RRC) release message related to an RRC inactive state, including sounding reference signal (SRS) configuration information for positioning provided in a pre-configured type; and in case that an event requiring activation of the SRS configuration information for positioning occurs to a terminal, and in case that the base station is configured to operate a cell belonging to a validity area regarding the SRS configuration information for positioning, receive, via the transceiver, an RRC resume request message from the terminal.

### [Advantageous Effects]

According to an embodiment of the disclosure, a UE's processing load and power consumption for positioning the UE in an inactive state may be reduced. In addition, sounding reference signal transmission by the UE may be efficiently configured such that the UE in an inactive state can be positioned more efficiently.

Advantageous effects obtainable from the disclosure may not be limited to the above-mentioned effects, and other effects which are not mentioned may be clearly understood from the following descriptions by those skilled in the art to which the disclosure pertains.

### [Description of Drawings]

The above and other aspects, features, and advantages will be more apparent from the following description of embodiments of the disclosure with reference to the accompanying drawings.
FIG. 1 illustrates a structure of a next-generation mobile communication system according to an embodiment of the disclosure.
FIG. 2 illustrates a network structure according to an embodiment of the disclosure.
FIG. 3 illustrates a process in which a UE according to an embodiment of the disclosure configures a sounding reference signal (SRS) resource.
FIG. 4 illustrates a procedure in which a UE according to an embodiment of the disclosure performs SRS transmission in an RRC_INACTIVE state.
FIG. 5 illustrates a procedure in which a UE according to an embodiment of the disclosure receives SRS configuration information in an RRC_CONNECTED state, activates one thereof in an RRC_INACTIVE state, and then transmits the same.
FIG. 6 illustrates a procedure in which a UE according to an embodiment of the disclosure receives SRS configuration information in advance in an RRC_CONNECTED state.
FIG. 7 illustrates a procedure in which a UE according to an embodiment of the disclosure activates SRS transmission in an RRC_INACTIVE state.
FIG. 8 illustrates a procedure in which a gNB according to an embodiment of the disclosure pre-generates SRS configuration information which can be used by a UE in an RRC_INACTIVE state.
FIG. 9 illustrates a procedure in which a gNB according to an embodiment of the disclosure releases SRS configuration information pre-configured for a UE.
FIG. 10 is a block diagram illustrating an internal structure of a UE according to an embodiment of the disclosure.
FIG. 11 is a block diagram illustrating a structure of a base station according to an embodiment of the disclosure.

### [Mode for Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. Hereinafter, embodiments of the disclosure will be described with reference to the accompanying drawings.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards may be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

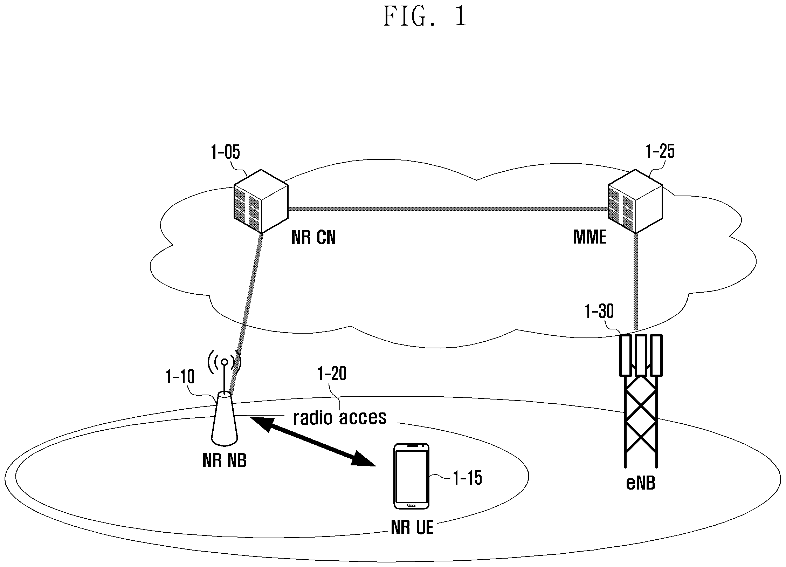

FIG. 1 illustrates a structure of a next-generation mobile communication system according to an embodiment of the disclosure.

Referring to FIG. 1, as illustrated therein, a radio access network of a next-generation mobile communication system (hereinafter NR or 5G) may include a next-generation base station (new radio node B, hereinafter NR NB, gNB, NR gNB, or NR base station) 1-10, and a new radio core network (NR CN) 1-05. Of course, the above example is not limiting, and the radio access network of the next-generation mobile communication system may include a larger number of entities than those of the above example. A user terminal (new radio user equipment, hereinafter NR UE or NR terminal) 1-15 may access an external network via the NR gNB 1-10 and the NR CN 1-05.

In FIG. 1, the NR gNB 1-10 corresponds to an evolved node B (eNB) of a conventional LTE system. The NR gNB 1-10 is connected to the NR UE 1-15 through a radio channel 1-20 and may provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly is required, and the NR gNB 1-10 serves as the device. In general, one NR gNB 1-10 may control multiple cells.

According to an embodiment of the disclosure, in order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 1-05 may perform functions such as mobility support, bearer configuration, and QoS configuration. The NR CN 1-05 is a device responsible for various control functions as well as a mobility management function for a UE, and may be connected to multiple base stations. In addition, the next-generation mobile communication system may interwork with the existing LTE system, and the NR CN 1-05 may be connected to an MME 1-25 via a network interface. The MME may be connected to an eNB 1-30 that is an existing base station.

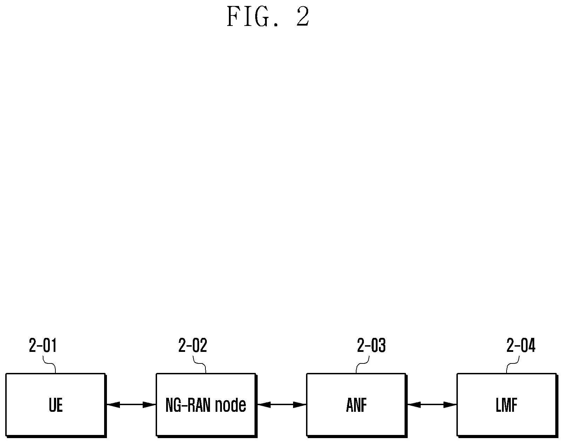

FIG. 2 illustrates a network structure according to an embodiment of the disclosure.

Specifically, FIG. 2 illustrates a network structure for providing a UE positioning service in a next-generation mobile communication system according to an embodiment of the disclosure. The term "UE positioning service" may hereinafter be used interchangeably with the term "LoCation Services (LCS)".

Referring to FIG. 2, the network for providing LCS in a next-generation mobile communication system may include a UE 2-01, an NG-RAN node 2-02, an access and mobility function (AMF) 2-03, and a location management function (LMF) 2-04. The UE 2-01 may communicate with the LMF 2-04 through the NG-RAN node 2-02 and the AMF 2-03, and may exchange information necessary to position the UE. The AMF 2-03 and the LMF 2-04 may be referred to as a single core network entity. In order to provide LCS, respective entities may perform the following roles, for example.

The UE 2-01 may measure a radio signal necessary to position the UE and may transfer the measurement result to the LMF 2-04.

The NG-RAN node 2-02 may transmit a downlink radio signal necessary to position the UE and may measure an uplink radio signal transmitted by a target UE.

The AMF 2-03 may receive an LCS request message from an LCS requester and may then transfer the LCS request message to the LMF 2-04, thereby requesting (or instructing) the same to provide a UE location providing service. If the LMF 2-04 processes the LCS (or positioning) request and then transmits (or responds) a response message regarding a result of positioning the UE to the AMF 2-03, the AMF 2-03 may transfer the result of positioning the UE to the LCS requester after receiving the response message (or response).

The LMF 2-04 may include a device configured to receive the LCS request message from the AMF 2-03 (have the LCS request message transferred therefrom) and to process the same, and may control overall processes necessary to position the UE. In order to position the UE, the LMF 2-04 may provide the UE 2-01 with auxiliary information necessary for positioning and signal measurement and may acquire (or receive) the result value, and an LTE positioning protocol (LPP) may then be used as a protocol for data exchange. The LPP may define a message specification used between the UE 2-01 and the LMF 2-04 for a positioning service. In addition, the LMF 2-04 may exchange positioning reference signal (hereinafter, referred to as PRS) configuration information and sounding reference signal (hereinafter, referred to as SRS) measurement results, which are to be used for positioning, with the NG-RAN node 2-02 as well. NR positioning protocol A (NRPPa) may then be used as a protocol for data exchange, and NRPPa may define a message specification used between the NG-RAN node 2-02 the LMF 2-04.

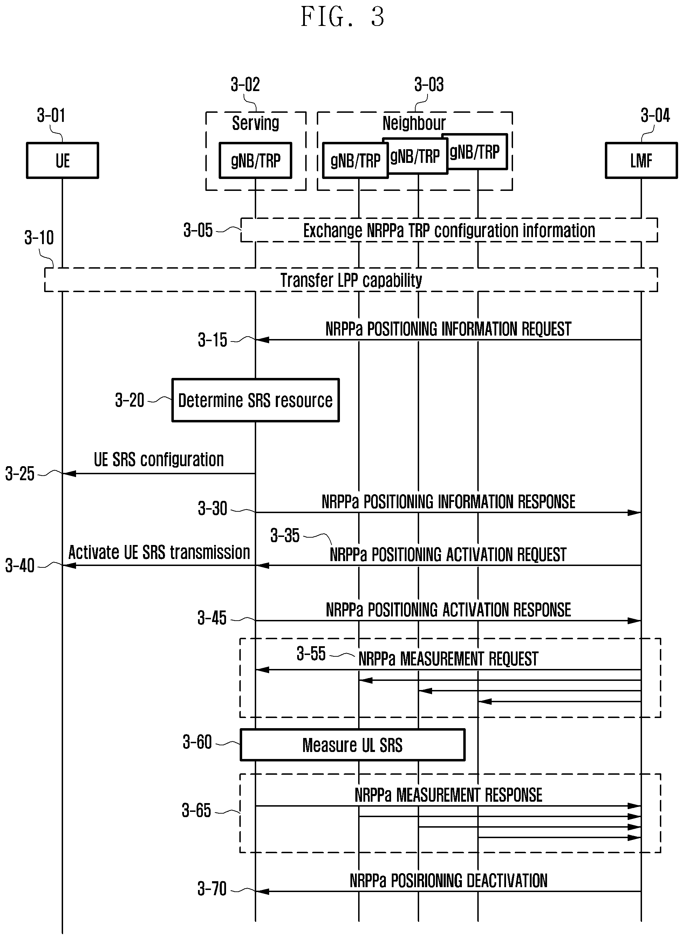

FIG. 3 illustrates a process in which a UE according to an embodiment of the disclosure configures a sounding reference signal (SRS) resource.

FIG. 3 illustrates a procedure in which an LMF 3-04 configures sounding reference signal (SRS) transmission needed by a UE 3-01 to perform at least one operation among a UL positioning method or a DL+UL positioning method. The steps illustrated in FIG. 3 are not necessary included in their entirety, depending on configurations and/or definitions in the system, for example, and some steps may be omitted.

The UL positioning method may refer to a scheme of positioning a UE, based on an uplink signal transmitted by the UE. For example, UL positioning method may include a scheme in which a UE transmits an SRS signal through the uplink, and a gNB/transmission reception point (TRP) receives (or measures) the SRS signal transmitted by the UE and acquires SRS measurement information (or measured result value), based on which the UE is positioned.

The DL+UL positioning method may refer to a scheme of positioning a UE, based on a downlink signal transmitted by a gNB/TRP and an uplink signal transmitted by the UE. For example, the gNB/TRP may transmit a positioning reference signal (PRS) through the downlink. Upon receiving the PRS transmitted by the gNB/TRP, the UE may acquire PRS measurement information (or measured result value). For example, the UE may transmit an SRS signal through the uplink and, upon receiving (or measuring) the SRS signal transmitted by the UE, the gNB/TRP may acquire SRS measurement information (or measured result value). Thereafter, the PRS measurement information (or measured result value) measured by the UE and the SRS measurement information (or measured result value) measured by the gNB/TRP may be used together to position the UE.

Therefore, in order to position a UE by using at least one of the UL positioning method or the DL+UL positioning method, it is necessary to perform a procedure in which the UE is configured to transmit an SRS. Hereinafter, procedures performed in respective steps will be described.

In step 3-05, the LMF 3-04 may exchange NRPPa TRP configuration information with a serving gNB/TRP 3-02 and a neighbour gNB/TRP 3-03. (NRPPa TRP configuration information exchange)

The LMF 3-04 may acquire information necessary to perform a UL positioning method from the serving gNB/TRP 3-02 and the neighbour gNB/TRP 3-03. The information necessary to perform a UL positioning method may include at least one piece of information from among NR cell information, PRS configuration, spatial direction information, and position information. In step 3-10, the UE's capability information may be exchanged between the LMF 3-04 and the UE 3-01.

### (LPP capability transfer)

The LMF 3-04 may request the UE 3-02 provide the UE's capability information related to positioning and may then receive a response therefrom.

In step 3-15, the LMF 3-04 may transmit an NRPPa positioning information request message to the serving gNB/TRP 3-02. (NRPPa POSITIONING INFORMATION REQEST)

The NRPPa positioning information request message transmitted by the LMF 3-04 may include information for determining an SRS transmission resource configuration of the UE necessary for UL positioning, based on information already collected by the LMF (for example, neighbor TRPs' position information, the UE's existing position information, TRPs' SSB/PRS transmission information, and the like), and requesting the serving gNB/TRP 3-02 to provide the same. The message may include information regarding at least one of the number of necessary SRS resources, periodicity, pathloss reference, and spatial relation.

In step 3-20, the serving gNB/TRP 3-02 may finally determine an SRS resource used by the UE to transmit an SRS. (gNB Determines UL SRS resources)

After receiving the NRPPa positioning information request message from the LMF 3-04, the serving gNB/TRP 3-02 may finally determine an SRS resource to be configured for the UE, based on the received message.

In step 3-25, the serving gNB/TRP 3-02 may transfer the SRS resource configuration information (or SRS resource transmission configuration information, UE SRS configuration) determined in step 3-20 to the UE 3-01. (UE SRS configuration)

The serving gNB/TRP 3-02 may transfer the SRS resource configuration information to the UE 3-01 through RRC signaling.

In step 3-30, the serving gNB/TRP 3-02 may transmit an NRPPa positioning information response message to the LMF 3-04. (NRPPa POSITIONING INFORMATION RESPONSE)

The NRPPa positioning information response message transmitted by the serving gNB/TRP 3-02 may be used by the serving gNB/TRP 3-02 to transfer the SRS resource configuration information (for example, the SRS resource's position on the time/frequency axis, period, spatial relation information, and the like) finally transferred to the UE 3-01 in step 3-25 to the LMF.

In step 3-35, the LMF 3-04 may transfer an NRPPa POSITIONING ACTIVATION request message to the serving gNB/TRP 3-02. (NRPPa POSITIONING ACTIVATION REQUEST)

The NRPPa POSITIONING ACTIVATION request message may be used by the LMF 3-04 to request the serving gNB/TRP 3-02 to activate SRS transmission of the UE 3-01 in case that the UE 3-02 is configured to transmit a semi-persistent SRS or aperiodic SRS.

In step 3-40, the serving gNB/TRP 3-02 may configure the UE 3-01 to activate SRS transmission. (Activate UE SRS transmission)

A process in which, after receiving the NRPPa POSITIONING ACTIVATION REQUEST message, the serving gNB/TRP 3-02 indicates SRS activation to the UE 3-40 through a MAC CE or DCI, may be included.

In step 3-45, the serving gNB/TRP 3-02 may transmit an NRPPa POSITIONING ACTIVATION RESPONSE message to the UE 3-01. (NRPPA POSITIONING ACTIVATION RESPONSE)

The NRPPa POSITIONING ACTIVATION RESPONSE message, which is a response to the NRPPa POSITIONING ACTIVATION REQUEST message, may be used by the serving gNB/TRP 3-02 to transfer information regarding whether SRS activation is completed or not (or to indicate whether SRS activation is completed or not) to the LMF 3-04.

In step 3-55, the LMF 3-04 may transmit an NRPPa MEASUREMENT REQUEST message. (NRPPa MEASUREMENT REQUEST)

The NRPPa MEASUREMENT REQUEST message may be used by the LMF 3-04 to transfer a request for SRS measurement and result reports transmitted by the UE to the serving gNB/TRP 3-02 and the neighbouring gNB/TRP 3-03. The NRPPa MEASUREMENT REQUEST message may also include SRS resource information configured for the UE 3-01.

In step 3-60, the serving gNB/TRP 3-02 and the neighbouring gNB/TRP 3-03 may measure the SRS transmitted by the UE 3-01. (UL SRS Measurements)

After receiving the SRS measurement request from the LMF 3-04 through the NRPPa MEASUREMENT REQUEST message, the serving gNB/TRP 3-02 and the neighbouring gNB/TRP 3-03 may measure the SRS transmitted by the UE 3-01, based on SRS configuration information included in the NRPPa MEASUREMENT REQUEST message.

In step 3-65, the serving gNB/TRP 3-02 and the neighbouring gNB/TRP 3-03 may transmit an NRPPa MEAUREMENT RESPONSE message to the LMF 3-04. (NRPPa MEASUREMENT RESPONSE)

The NRPPa MEAUREMENT RESPONSE message may be used by the serving gNB/TRP 3-02 and the neighbouring gNB/TRP 3-03, which have received an SRS measurement request from the LMF 3-04 in step 3-55 described above, to transfer the SRS measurement result to the LMF 3-04.

In step 3-70, the LMF 3-04 may transmit an NRPPa POSITIONING DEACTIVATION message to the serving gNB/TRP 3-02. (NRPPa POSITIONING DEACTIVATION)

The NRPPa POSITIONING DEACTIVATION message may be transmitted to the serving gNB/TRP 3-02 by the LMF 3-04 in order to deactivate SRS transmission which has been requested in step 3-35 after finishing the positioning technique operation.

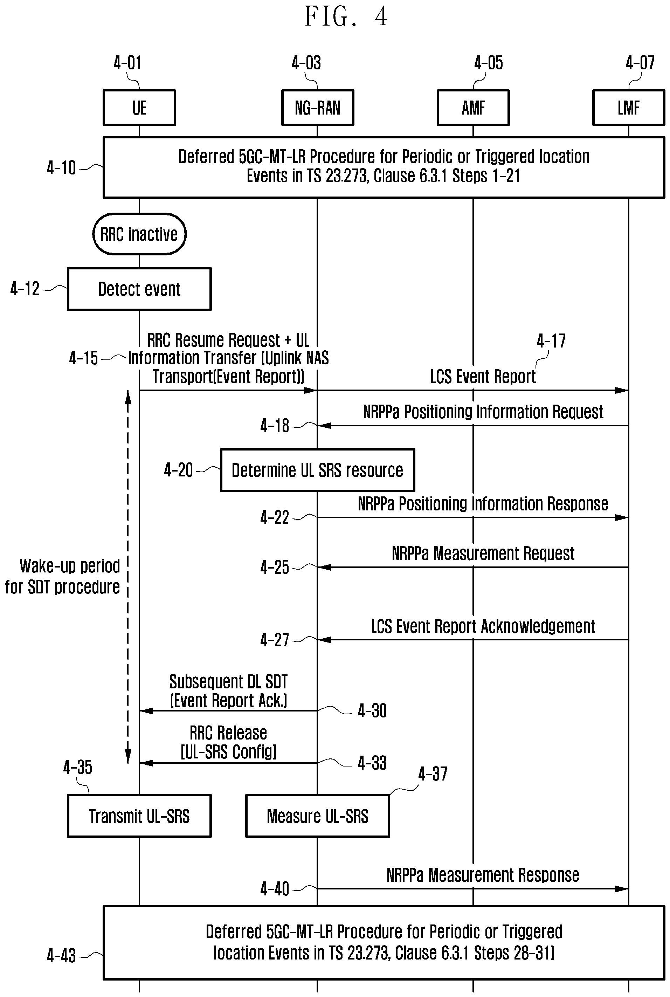

FIG. 4 illustrates a procedure in which a UE according to an embodiment of the disclosure performs SRS transmission in an RRC_INACTIVE state.

FIG. 4 illustrates a procedure in which, when an event that requests the UE to performs SRS transmission in an RRC_INACTIVE state has occurred, the UE reports the event to the LMF, receives an SRS transmission configuration, and performs SRS transmission. The steps illustrated in FIG. 4 are not necessary included in their entirety, depending on configurations and/or definitions in the system, for example, and some steps may be omitted.

In step 410, the network may configure an event that requires SRS transmission to be performed by the UE. For example, steps 1-21 regarding a deferred 5GC-mobile terminated location request (5GC-MT-LR) regarding a periodic or triggered location event, specified in TS 23.273, clause 6.3.1, may be performed. The LMF may perform one or more positioning procedures in step 15 of TS 23.273, clause 6.3.1, thereby requesting and acquiring UE positioning capability, or may provide necessary support data to the target device. The LCS periodic-triggered location invoke in step 16 of TS 23.273, clause 6.3.1 may include an embedded LPP request location information message which is allowed with regard to each reported location event, or which indicates necessary location measurement/ SRS transmission. The UE may be released from RRC_CONNECTED to RRC_INACTIVE through RRCRelease including SuspendConfig transmitted by the last serving gNB.

In step 4-12, the UE may monitor the occurrence of a triggered or periodic event requested in step 4-10.

In step 4-15, the UE may transmit a UL information transfer message including an uplink NAS transport to the gNB together with an RRC resume request message. The uplink NAS transport may include event report information.

For example, if an event is detected (or immediately before an event is detected), the UE may transmit an RRC UL information transfer message including an uplink NAS transport message together with an RRC resume request using small data transmission (SDT). The UE may include an LCS event report in the payload container of the UL NAS transport message and, as defined in TS 24.501, may include a deferred routing identifier received in step 4-10 in additional information of the UL NAS transport message.

The gNB which has received the message in step 4-15 may be identical to or different from the last serving gNB at the time at which the UE is released to the RRC_INACTIVE state.

In step 4-17, the gNB may transmit an LCS event report message to the LMF.

For example, the gNB which has received the message in step 4-15 (receiving gNB) may transmit an LCS event report to the serving AMF together with an LPP request assistance data message included in an NGAP uplink NAS transport message. The AMF may determine an LMF from the deferred routing identifier received in an additional information IE of the UL NAS transport message and may trigger a Namf_Communication_N1MessageNotify service operation such that the LCS event report is transferred to the LMF together with an embedded LPP message. The AMF may also have a correlation identifier set by a payload container type and a deferred routing identifier and included therein.

If the anchor gNB is not changed from the last serving gNB to the receiving gNB, the LCS event report may be transferred from the receiving gNB to the last serving gNB through an RRC TRANSFER which is an XnAP message as in TS 38.423. In addition, following downlink/uplink messages may also be transferred from the last serving gNB to the receiving gNB through an RRC TRANSFER which is an XnAP message.

In step 4-18, the LMF may transmit an NRPPa positioning information request message to the gNB.

For example, the LMF may transmit an NRPPa positioning information request message to the receiving gNB in order to request a UL-SRS regarding the target device.

In step 4-20, the gNB may determine a UL SRS resource.

For example, the receiving gNB may determine resources which can be used for a UL-SRS.

In step 4-22, the gNB may transmit an NRPPa positioning information response message to the LMF.

For example, the receiving gNB may provide the LMF with UL-SRS configuration information by using an NRPPa positioning information response message.

In step 4-25, the LMF may transmit an NRPPa measurement request message to the gNB.

For example, the LMF may transmit an NRPPa measurement request message including UL-SRS measurement configuration information to a group of gNBs.

In step 4-27, the LMF may transmit an LCS event report acknowledgement to the gNB. In step 4-30, the gNB may transmit a subsequent DL SDT including an event report acknowledgement to the UE.

For example, if the LMF transmits an SS LCS event report acknowledgement to the receiving gNB, the receiving gNB may provide the UE with an SS event report acknowledgement through a subsequent DL SDT.

In step 4-33, the gNB may transmit an RRC release message including UL-SRS configuration information to the UE.

For example, the receiving gNB may transmit an RRC release message including suspendConfig to the UE, thereby maintaining the UE in the RRC_INACTIVE state. The RRC release message may include UL-SRS configuration information.

In step 4-35, the UE may transmit a UL-SRS. In step 4-37, the gNB/TRP may measure the UL-SRS.

For example, the UE may perform UL-SRS transmission, and each configured TRP may perform UL-SRS measurement.

In step 4-40, the gNB may transmit an NRPPa measurement response message to the LMF.

For example, after performing the UL-SRS measurement, gNB(s) which have received the message in step 4-25 may provide the LMF with a UL measurement result through the NRPPa measurement response message.

In step 4-43, remaining operations for the deferred 5GC-MT-LR procedure may be performed.

For example, steps 28 to 31 regarding the deferred 5GC-MT-LR procedure regarding a periodic or triggered location event, specified in TS 23.273, clause 6.3.1, may be performed.

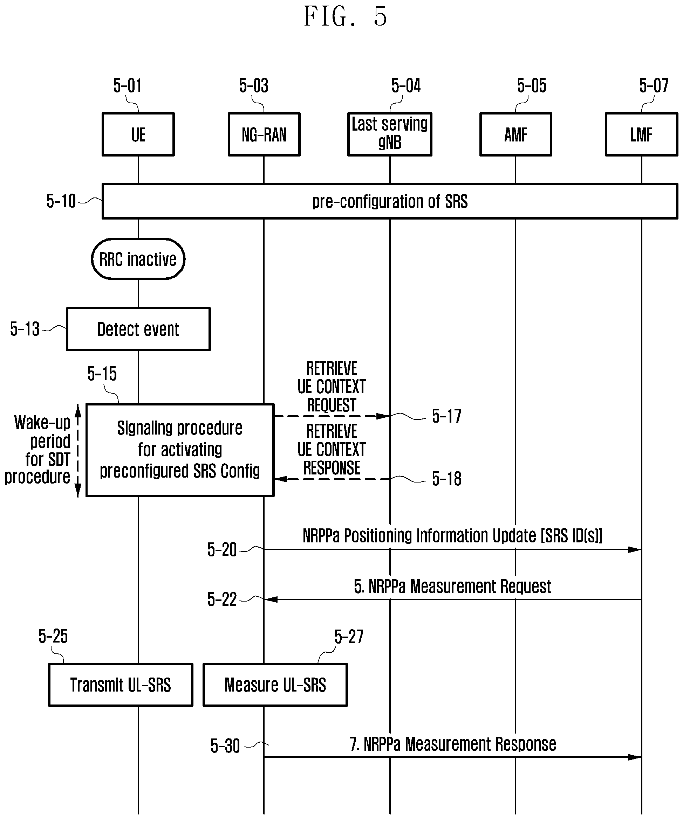

While performing a small data transmission (SDT) operation for SRS configuration reception and transmission activation in the RRC_INACTIVE state through the above-described process, the UE 4-01 needs to consume a similar amount of power to the RRC_CONNECTED state at least during the period of time 4-34 from step 4-15 to step 4-33. Embodiments of the disclosure described below with reference to FIG. 5, FIG. 6, FIG. 7, and FIG. 8 propose a method and an apparatus wherein the time for which the UE in the RRC_INACTIVE state performs the SDT operation for SRS transmission configuration and activation is reduced, thereby reducing the power consumed by the UE in the positioning process and the positioning delay time.

FIG. 5 illustrates a procedure in which a UE according to an embodiment of the disclosure receives SRS configuration information in an RRC_CONNECTED state, activates one thereof in an RRC_INACTIVE state, and then transmits the same.

Referring to FIG. 5, a procedure in which a UE 5-01 receives SRS configuration information in advance in an RRC_CONNECTED state, and then activates configured SRS transmission within a short time through minimum signaling in an RRC_INACTIVE state is illustrated. The steps illustrated in FIG. 5 are not necessary included in their entirety, depending on configurations and/or definitions in the system, for example, and some steps may be omitted.

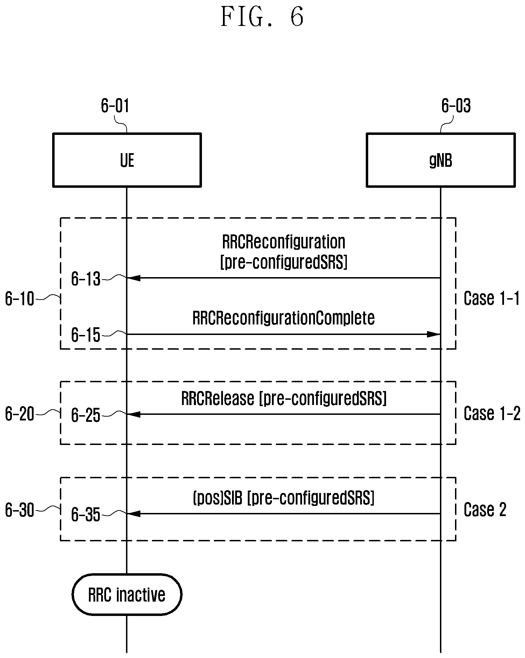

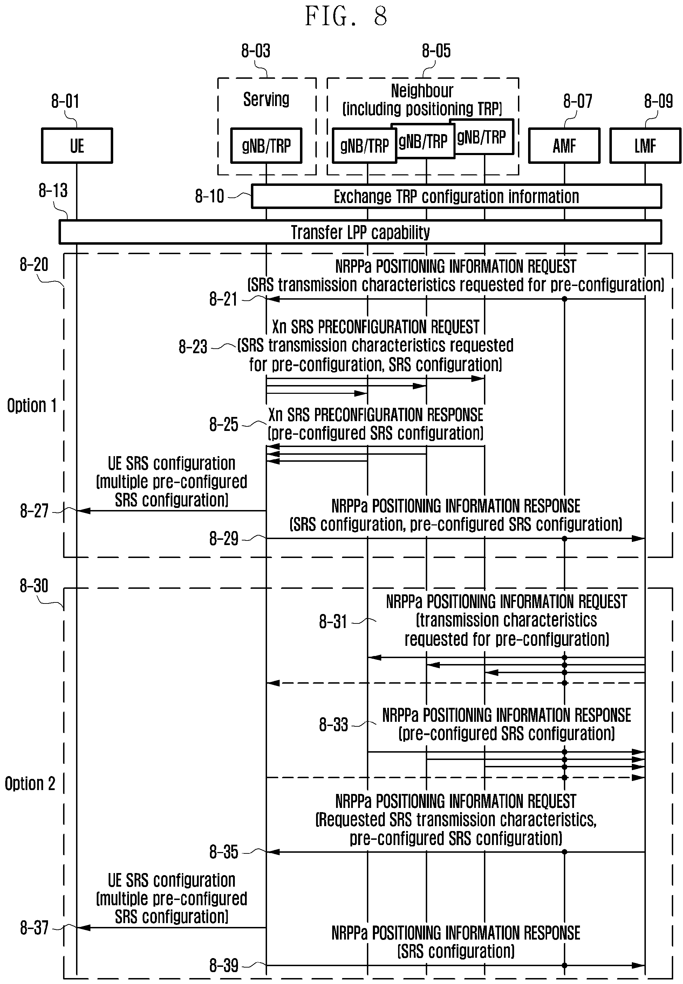

In step 5-10, the UE 5-01 in the RRC_CONNECTED state may receive SRS configuration information (for example, configuration information necessary to perform SRS transmission in the RRC_INACTIVE state) in advance. To this end, the LMF 5-07 may request the gNB 5-03 or 5-04 to make an SRS pre-configuration for the UE, and the gNB may determine an SRS pre-configuration for the UE, according to the request of the LMF. The detailed process in which the gNB determines an SRS pre-configuration for the UE will be described in more detail with reference to the embodiment in FIG. 8. Thereafter, the gNB may transfer the determined SRS pre-configuration to the UE through RRC signaling. The procedure in which the SRS pre-configuration is transferred to the UE through RRC signaling and pieces of information included in the SRS pre-configuration will be described in more detail with reference to the embodiment in FIG. 6.

In step 5-13, the UE may be instructed by the LMF, in advance, to start SRS transmission when a specific event (for example, an event repeated periodically) occurs. In step 5-13, the UE may detect the occurrence of the specific event indicated by the LMF.

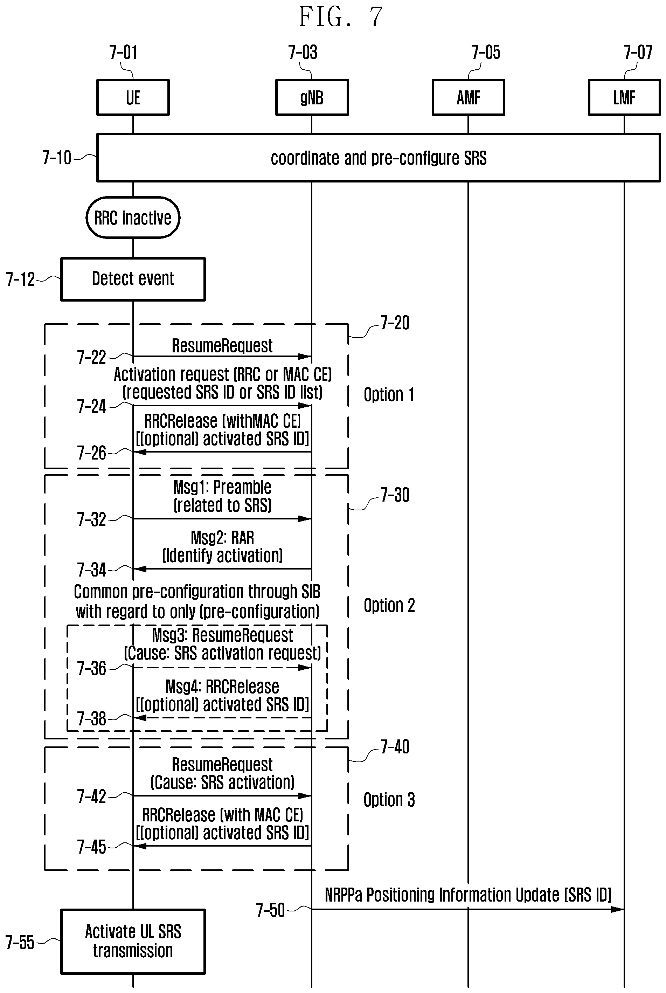

In step 5-15, the UE may initiate a signaling procedure for activating one or more of SRS resources (for example, SRS resource set) included in the SRS preconfiguration received in advance in step 5-10 if a specific event for starting SRS transmission has occurred in step 5-13. The UE may request the gNB 5-03 to activate SRS resources, and the gNB may instruct the UE to activate one or more of SRS resources included in the SRS pre-configuration. The detailed procedure for activating SRS transmission will be described in more detail with reference to the embodiment in FIG. 7.

In addition, if the UE has moved over time, the gNB 5-04 which has configured an SRS pre-configuration for the UE in step 5-10 and the gNB 5-03 which has been requested to activate SRS resources in step 5-15 may differ. In this case, the gNB 5-03 which has been requested to activate SRS resources may perform a procedure of requesting (5-17) the gNB 5-04 which has configured an SRS preconfiguration for the UE to provide UE context including an SRS pre-configuration, in order to secure configuration information regarding SRS resources to be activated, and receiving (5-18) UE context in response thereto.

In step 5-20, the gNB 5-03 may instruct the UE 5-01 to activate SRS resources (in other words, to perform SRS transmission by using a specific SRS resource) in step 5-15, and may then report activated SRS resource information (for example, SRS resource set ID or SRS resource ID) to the LMF 5-07 through an NRPPa message.

In step 5-22, after receiving activated SRS resource information from the gNB 5-03 in step 5-20, the LMF 5-07 may recognize target NG-RANs (gNBs or TRPs) 5-03 supposed to receive and measure the SRS resource. The LMF may transmit an NRPPa message to the NG-RANs to instruct them to receive and measure an SRS transmitted by the UE 5-01. The NRPPa message may include configuration information of the SRS to be received by the NG-RANs.

In steps 5-25 and 5-27, the UE 5-01 may perform SRS transmission by using the SRS resource activated in step 5-15. The NG-RANs (gNBs or TRPs) 5-03 may receive and measure the SRS transmitted by the UE.

In step 5-30, NG-RANs (gNBs or TRPs) 5-03 may report the SRS measurement result to the LMF as instructed by the LMF 5-07 in step 522.

While performing a small data transmission (SDT) operation for SRS transmission activation in the RRC_INACTIVE state through the above-described process, the UE 5-01 needs to consume a similar amount of power to the RRC_CONNECTED state during the period of time 5-16 for which the signaling procedure in step 5-15 is performed. The UE may receive, in advance, configuration information for SRS transmission in the RRC_INACTIVE state in step 5-10 and may activate preconfigured SRS resources through comparatively simple signaling in step 5-15, thereby reducing the time 5-16 necessary to perform SDT in the RRC_INACTIVE state for the sake of SRS transmission configuration and activation, compared with the time 4-34 in FIG. 4. Therefore, the UE may reduce the power consumed for positioning in RRC_INACTIVE and the positioning delay time by using the SRS pre-configuration.

FIG. 6 illustrates a procedure in which a UE according to an embodiment of the disclosure receives SRS configuration information in advance in an RRC_CONNECTED state.

Referring to FIG.6, a procedure in which a gNB 6-03 provides configuration information for SRS transmission (hereinafter, referred to as SRS pre-configuration) to a UE 6-01 in an RRC_INACTIVE state in advance (in other words, before the UE transitions to an RRC_INACTIVE state) is illustrated. This procedure may correspond to steps 5-10 in the embodiment of FIG. 5. The steps illustrated in FIG. 6 are not necessary included in their entirety, depending on configurations and/or definitions in the system, for example, and some steps may be omitted.

The gNB may transfer a UE-dedicated (in other words, applied to a specific UE only) SRS pre-configuration to the UE through RRCReconfiguration (Case 1-1) 6-10 and RRCRelease (Case 1-2) 6-20 messages. In addition, the gNB may broadcast an SRS pre-configuration common to all UEs in a specific cell (in other words, commonly applied to all UEs in a specific cell) through an SIB (Case 2) 6-30 message.

The SRS pre-configuration may include one or multiple SRS configuration information parameters (for example, SRS-PosResource, SRS-PosResourceSet, or SRS-PosConfig). Each piece of SRS configuration information may be associated with a single cell or multiple cells. If the SRS configuration information is associated with a single cell, this may mean that the SRS configuration information is valid (available) only in the corresponding cell. If the SRS configuration information is associated with multiple cells, this may mean that the SRS configuration information is valid (available) only in the corresponding multiple cells. If the SRS configuration information is associated with multiple cells, the cells may be indicated in a list type (to this end, at least one of each cell's NR cell global ID, PCI, and NR-ARFCN values may be included in the list). In addition, the list of multiple cells may be defined as a validity area of the SRS configuration information.

The SRS configuration information (for example, SRS-PosResource, SRS-PosResourceSet, or SRS-PosConfig) may include at least one of the following parameters or a combination thereof, respectively.
◆ SRS-PosConfig
   ▪ SRS-PosResourceSet
      - srs-PosResourceSetId
      - srs-PosResourceIdList
      - resourceType
      - alpha
      - p0
      - pathlossReferenceRS-Pos
   ▪ SRS-PosResource
      - srs-PosResourceId
      - transmissionComb
      - resourceMapping (startPosition, nrofSymbols)
      - freqDomainShift
      - freqHopping (c-SRS)
      - groupOrSequenceHopping
      - resourceType
      - sequenceId
      - spatialRelationInfoPos

In addition, if the SRS configuration information is connected to multiple cells, parameters which can be commonly used in multiple cells (for example, parameters other than pathlossReferenceRS-Pos and spatialRelationInfoPos) among the above parameters may be configured commonly, instead of being configured redundantly for respective cells, in order to reduce the signaling load. On the other hand, parameters which may have different values configured for respective cells (for example, pathlossReferenceRS-Pos and spatialRelationInfoPos) may have separate values configured for respective cells. Alternatively, parameters which may have different values configured for respective cells (for example, pathlossReferenceRS-Pos and spatialRelationInfoPos) may not be configured inside the SRS preconfiguration, but may be configured together when an SRS transmission resource is activated later in an RRC_INACTIVE state. For reference, parameter pathlossReferenceRS-Pos refers to a reference signal used to adjust transmission power when an SRS is transmitted to position the UE, and may be mainly configured as a downlink reference signal transmitted by the UE's serving gNB. Therefore, parameter pathlossReferenceRS-Pos may need to be configured for each cell in consideration of a case in which the serving cell is varied by the UE's movement.

FIG. 7 illustrates a procedure in which a UE according to an embodiment of the disclosure activates SRS transmission in an RRC_INACTIVE state.

Referring to FIG.7, a procedure in which a UE that has received an SRS preconfiguration activates an SRS transmission resource in response to the occurrence of an event which requires SRS transmission for positioning is illustrated. The steps illustrated in FIG. 7 are not necessary included in their entirety, depending on configurations and/or definitions in the system, for example, and some steps may be omitted.

In step 7-10, the UE 7-01 may receive an SRS pre-configuration from a gNB 7-03 in advance (for example, before transmitting an SRS for positioning in an RRC_INACTIVE state).

Thereafter, if an event which requires SRS transmission for positioning in the RRC_INACTIVE state occurs in step 7-15, the UE may trigger a procedure for activating one or multiple SRS transmission resources (for example, SRS-PosResource or SRS-PosResourceSet) which are currently valid in the UE's serving cell, among SRS resources included in the SRS pre-configuration received in advance.

In order to activate SRS transmission resources, a method using at least one of the following three options 7-20, 7-30, and 7-40, or a combination thereof, may be applied.

Option 1 7-20: the UE 7-01 reports the index value (srs-PosResourceId or srs-PosResourceSetId) of an SRS transmission resource (SRS-PosResource or SRS-PosResourceSet) to be activated to the gNB 7-03 by using an RRC message or MAC CE.

In step 7-22, in order to transmit an RRC message or MAC CE requesting activation of SRS transmission resources to the gNB, the UE may send an RRCResumeRequest message, thereby starting a small data transmission (SDT) procedure. The UE may then perform uplink and downlink transmissions similarly to the RRC_CONNECTED state. To this end, the UE may receive gNB scheduling information (for example, DCI) while monitoring the PDCCH channel. Additionally, the RRCResumeRequest message may include the UE's identifier (for example, ShortI-RNTI-Value) together. The gNB may identify the UE that has started an RRC resume procedure for SRS transmission resource activation through the corresponding identifier, and may request another gNB (for example, a gNB from which the UE has received an SRS pre-configuration) to provide the UE's UE context by using the corresponding identifier, if necessary.

In step 7-24, the UE may transmit an RRC message or MAC CE for requesting SRS transmission resource activation to the gNB. The UE may select a transmission resource which is currently valid in the UE's serving cell, among SRS transmission resources included in the SRS pre-configuration received in step 7-10. If there is one SRS transmission resource which is currently valid in the serving cell, the UE may include nothing but the index value of the corresponding SRS transmission resource in the message 7-24, or may request SRS transmission resource activation only without including the index of the SRS transmission resource. Even if the message does not include the index of the SRS transmission resource, the gNB may know that the UE has requested activation of the corresponding resource because there is only one SRS transmission resource which is currently valid in the UE's serving cell. On the other hand, if there are multiple SRS transmission resources which are currently valid in the serving cell, the UE may select one of the multiple valid SRS transmission resources and may include the index value of the corresponding SRS transmission resource in the message 7-24, or may include a list of index values of the multiple SRS transmission resources in the message 7-24. If the UE includes index values of multiple SRS transmission resources in the message 7-24, the priority between the multiple SRS transmission resources (in other words, the UE's preference regarding the multiple SRS transmission resources) may be indicated through the order in the list. For example, the UE may include index values of multiple SRS transmission resources in the list in descending order of the UE's activation request priority (in other words, the UE's preference regarding the multiple SRS transmission resources). In addition, if a list of index values of multiple SRS transmission resources is included in the message 7-24, the UE may also include the number of SRS transmission resource, which need to be activated, therein.

In step 7-26, the gNB 7-03 may activate one or more of SRS transmission resources, activation of which has been requested by the UE 7-01 in step 7-24. The gNB may indicate the index value of one or multiple SRS transmission resources to be activated to the UE through an RRCRelease message or MAC CE. If the UE has transferred index values of multiple SRS transmission resources to the gNB in step 7-24, the index value of one or multiple SRS transmission resources may be included in the message 7-26, thereby activating corresponding SRS transmission resources. On the other hand, if the UE has transferred only one SRS transmission resource index to the gNB in step 7-24, one SRS transmission resource index value may be included in the message 7-26, thereby activating the corresponding SRS transmission resource. In another scheme, the message 7-26 may include no separate SRS transmission resource index value. In this case, the gNB may include only an indicator that approves what has been requested by the UE in step 7-24 in the message 7-26, thereby indicating activation of the SRS transmission resource, activation of which has been requested in step 7-24.

In addition, as described with reference to the embodiment in FIG. 6, the message 7-26 may also include parameters (for example, pathlossReferenceRS-Pos and spatialRelationInfoPos) which may have different values configured for each cell, among the SRS transmission configuration. In other words, additional configuration information (for example, pathlossReferenceRS-Pos and spatialRelationInfoPos) may be included with regard to each SRS transmission resource to be activated (SRS-PosResource or SRS-PosResourceSet).

In step 7-50, the gNB may report the index value and specific configuration information of SRS transmission resources, activation of which has been indicated to the UE 7-01, to the LMF 7-07. Although omitted in this embodiment, the LMF may thereafter instruct gNBs and TRPs to measure corresponding SRS transmission resources for the UE's positioning, based on the information reported in step 7-50.

In step 7-55, the UE may activation transmission with regard to the SRS transmission resource, activation of which has been indicated by the gNB in step 7-26. In addition, as in the embodiment in FIG. 6, if a UE-dedicated (in other words, applied to a specific UE only) SRS pre-configuration has been transferred to the UE through RRCReconfiguration (Case 1-1) 6-10 and RRCRelease (Case 1-2) 6-20 messages, this may mean that SRS transmission resources configured in the corresponding SRS pre-configuration have been configured solely for the UE. In this case, the UE may start transmission regarding the corresponding SRS transmission resource in step 7-55 immediately after reporting the index value of one of multiple SRS transmission resources to be activated to the gNB in step 7-24, without the gNB's activation instruction in step 7-26.

Option 2 7-30: the UE 7-01 transmit a preamble connected to a specific SRS transmission resource (SRS-PosResource or SRS-PosResourceSet), thereby requesting the gNB 7-03 to activate the corresponding SRS transmission resource.

In step 7-10, the UE may receive configuration information (SRS preconfiguration) necessary for SRS transmission for positioning in an RRC_INACTIVE state from the gNB in one of the schemes 6-13, 6-25, and 6-35 described above with reference to the embodiment in FIG. 6. If a UE-dedicated (in other words, applied to a specific UE only) SRS pre-configuration is configured for the UE through RRCReconfiguration (Case 1-1) 6-10 and RRCRelease (Case 1-2) 6-20 messages, the SRS pre-configuration may also include a contention free random access (CFRA) resource configuration (for example, RACH-ConfigDedicated) to be used for SRS transmission resource activation. In addition, each SRS transmission resource included in the SRS pre-configuration may be connected to a dedicated preamble resource to be used to activate the corresponding SRS transmission resource. In other words, each SRS transmission resource may have a dedicated preamble resource configured therefor to be used to activate the corresponding resource. Alternatively, a dedicated preamble resource may be configured such that the UE can use the same to request activation of an SRS transmission resource. On the other hand, if an SRS pre-configuration commonly to all UEs in a cell (in other words, commonly applied to all UEs in a specific cell) is broadcast through a (pos)SIB (Case2) 6-35 message, a contention based random access (CBRA) resource configuration (for example, RACH-ConfigCommon) to be used for SRS transmission resource activation may be configured together. In addition, each SRS transmission resource included in the SRS pre-configuration may be connected to a preamble resource to be used to activate the corresponding SRS transmission resource. In other words, each SRS transmission resource may have a specific preamble resource configured therefor to be used to activate the corresponding resource.

In step 7-32, in order to request activation of a specific SRS transmission resource, the UE may transmit a (dedicated) preamble connected to the corresponding SRS transmission resource, thereby starting a random access procedure. More specifically, the UE may select a transmission resource which is currently valid in the UE's serving cell, among SRS transmission resources included in the SRS preconfiguration received in step 7-10. If there is one SRS transmission resource which is currently valid in the serving cell, the UE may start a random access procedure by using a (dedicated) preamble resource connected to the corresponding SRS transmission resource. On the other hand, if there are multiple SRS transmission resources which are currently valid in the serving cell, the UE may select one of the multiple valid SRS transmission resources and may start a random access procedure by using a (dedicated) preamble resource connected to the corresponding SRS transmission resource. Alternatively, if only one valid SRS transmission resource which is currently valid in the serving cell has been configured in step 7-10, the UE start a random access procedure by using a dedicated preamble resource configured for the UE such that the same can be used to request activation of any SRS transmission resource other than a specific SRS transmission resource.

If the UE needs to activate multiple SRS transmission resources, the UE may repeatedly perform procedures 7-32, 7-34, 7-36, and 7-38 necessary to active respective SRS transmission resources.

In step 7-34, the gNB may transmit a RAR message in response to the preamble received in step 7-32. If the UE has transmitted a dedicated preamble connected to a specific SRS transmission resource by using a CFRA resource (for example, RACH-ConfigDedicated) in step 7-32, the UE may interpret that the RAR message corresponding to the preamble transmission is an instruction to activate the corresponding SRS transmission resource, and may then activate the corresponding SRS transmission resource. Alternatively, if only one valid SRS transmission resource has been configure for each cell in step 7-10, and if a configured dedicated preamble has been transmitted to the UE such that the UE can request activation of an SRS transmission resource by using a CFRA resource in step 7-32, the UE may interpret that the RAR message corresponding to the preamble transmission is an instruction to activate the single SRS transmission resource which is currently valid in the serving cell, and may then activate the corresponding SRS transmission resource. Such an operation of interpretating that a RAR message is an instruction to activate an SRS transmission resource is possible because, if the UE has transmitted a dedicated preamble connected to a specific SRS transmission resource by using a CFRA resource, the gNB can identify the UE concurrently with receiving the corresponding preamble in the corresponding CFRA transmission resource (in other words, because no additional contention resolution procedure is necessary). On the other hand, if the UE has transmitted a preamble connected to a specific SRS transmission resource by using a CFRA resource (for example, RACH-ConfigCommon) in step 7-32, following procedures 7-36 and 7-38 need to be performed to finish the contention resolution procedure even after receiving the RAR in step 7-34.

In step 7-36, the UE may transmit an RRCResumeRequest message for contention resolution by using an MSG3 transmission resource (UL grant) included in the RAR message received in step 7-34. A new value (for example, SRS-activation) may be defined and included as a resume cause in order to indicate that the corresponding RRCResume procedure has been triggered for SRS transmission resource activation. The RRCResumeRequest message may additionally include the UE's identifier (for example, ShortI-RNTI-Value). The gNB may identify the UE that has started the random access procedure for SRS transmission resource activation through the corresponding identifier, and may request another gNB (for example, a gNB from which the UE has received an SRS pre-configuration) to provide the UE's UE context by using the corresponding identifier, if necessary.

In step 7-38, the UE may receive an Msg4 from the gNB, thereby receiving an SRS transmission resource activation instruction. More specifically, the gNB may identify an SRS transmission resource, activation of which has been requested, based on the preamble received in step 7-32. In addition, the gNB may identify the UE which has requested SRS transmission resource activation through a UE identifier (for example, ShortI-RNTI-Value) included in the RRCResumeRequest message received in step 7-36. Thereafter, the gNB may transmit an MSG4 including the following pieces of information in step 7-38, thereby indicating activation of the SRS transmission resource, activation of which has been requested by the UE through preamble transmission in step 7-32.
- UE contention resolution identity MAC CE: a MAC CE including the UL CCCH SDU (in other words, RRCResumeRequest message) transmitted by the UE in step 7-36 may be included for contention resolution. If the gNB which has received a preamble transmitted by the UE in step 7-32 is identical to the gNB which has sent an RRC release message to instruct a transition to an RRC_INACTIVE state, the gNB may transmit DCI scrambled by the C-RNTI value previously used by the UE, thereby performing contention resolution. In this case, the UE contention resolution identity MAC CE may not be included in the Msg4 received in step 7-38.
- SRS activation MAC CE: a MAC CE for SRS transmission resource activation may be included. Therefore, the gNB may include the index value (srs-PosResourceId or srs-PosResourceSetId) of the SRS transmission resource, activation of which has been requested by the UE in step 7-32, in the corresponding MAC CE, thereby indicating activation of the corresponding SRS transmission resource. Alternatively, the gNB may not include a separate SRS transmission resource index in the corresponding MAC CE. In this case, the corresponding MAC CE may be interpreted as a confirmation of the SRS transmission resource activation request in step 7-32. Alternatively, the gNB may not include a separate MAC CE in the MSG4 for the sake of SRS transmission resource activation. In this case, the UE may interpret that any kind of Msg4 message that enables contention resolution is a message that confirms activation of the SRS transmission resource, activation of which has been requested in step 7-32.
- RRCRelease message: the gNB may recognize that the UE has started an RRC resume procedure for SRS transmission resource activation through a resume cause value in the RRCResumeRequest message received in step 7-36. Therefore, the gNB may transmit an Msg4 7-38 including the RRCRelease message without a separate additional operation, thereby transitioning the UE back to the RRC_INACTIVE state. The gNB may include the index value (srs-PosResourceId or srs-PosResourceSetId) of the SRS transmission resource, activation of which has been requested by the UE in step 7-32, in the RRCRelease message, thereby indicating activation of the corresponding SRS transmission resource.

In step 7-50, the gNB may report the index value and specific configuration information of SRS transmission resources, activation of which has been indicated to the UE 7-01, to the LMF 7-07. Although omitted in this embodiment, the LMF may thereafter instruct gNBs and TRPs to measure corresponding SRS transmission resources for the UE's positioning, based on the information reported in step 7-50.

In step 7-55, the UE may perform SRS transmission according to the instruction from the gNB in step 7-34 or 7-38 to activate the SRS transmission resource, activation of which has been requested in step 7-32.

If above option 2 is used, the UE does not have to perform an operation similar to the RRC_CONNECTED state for the sake of an SDT operation in the RRC_INACTIVE state, and the UE's power consumption may thus be reduced compared with above option 1 and following option 3.

Option 3 7-40: the UE 7-01 request the gNB 7-03 to activate an SRS transmission resource for positioning through an RRCResumeRequest message.

In step 7-42, the UE may send an RRCResumeRequest message to request activation of an SRS transmission resource. A new value (for example, SRS-activation) may be defined and included in the RRCResumeRequest message as a resume cause for indicating that the RRCResume procedure has been triggered for SRS transmission resource activation. The RRCResumeRequest message may additionally include the UE's identifier (for example, ShortI-RNTI-Value). The gNB may identify the UE that has started the RRC resume procedure for SRS transmission resource activation through the corresponding identifier, and may request another gNB (for example, a gNB from which the UE has received an SRS pre-configuration) to provide the UE's UE context by using the corresponding identifier, if necessary. After receiving a request for SRS transmission resource activation for positioning from the UE through the RRCResumeRequest message, the gNB may determine to activate one or more of SRS transmission resources included in the SRS pre-configuration transferred to the UE in step 7-10.

In step 7-45, the gNB 7-03 may activate one or more of SRS transmission resources included in the SRS pre-configuration transferred to the UE 7-01 in step 7-10. The gNB may indicate the index value of one or multiple SRS transmission resources to be activated to the UE through an RRCRelease message or MAC CE. In addition, the gNB may transition the UE back to the RRC_INACTIVE state by transmitting an RRCRelease message to the UE. More specifically, the gNB may identify that the corresponding RRC resume procedure is for SRS transmission resource activation, based on the resume cause value in the RRCResumeRequest message transmitted by the UE in step 7-42. Therefore, the gNB may transition the UE back to the RRC_INACTIVE state through an RRCRelease message without a separate additional operation.

In addition, as described with reference to the embodiment in FIG. 6, if parameters (for example, pathlossReferenceRS-Pos and spatialRelationInfoPos) which may have different values configured for each cell, among the SRS transmission configuration, are not included in the SRS pre-configuration in step 7-10, corresponding parameters may be included in the message 7-45 together. In other words, additional configuration information (for example, pathlossReferenceRS-Pos and spatialRelationInfoPos) may be included with regard to each SRS transmission resource to be activated (SRS-PosResource or SRS-PosResourceSet).

In step 7-50, the gNB may report the index value and specific configuration information of SRS transmission resources, activation of which has been indicated to the UE 7-01, to the LMF 7-07. Although omitted in this embodiment, the LMF may thereafter instruct gNBs and TRPs to measure corresponding SRS transmission resources for the UE's positioning, based on the information reported in step 7-50.

In step 7-55, the UE may perform activate transmission of the SRS transmission resource, activation of which has been indicated by the gNB in step 7-45.

FIG. 8 illustrates a procedure in which a gNB according to an embodiment of the disclosure pre-generates SRS configuration information which can be used by a UE in an RRC_INACTIVE state.

Referring to FIG. 8, the serving gNB 8-03 may cooperate with a neighbour gNB 8-05 and an LMF 8-09 in order to pre-generate SRS configuration information which can be used by the UE 8-01 in an RRC_INACTIVE state. The serving gNB may generate an SRS pre-configuration through the following stepwise procedure. The steps illustrated in FIG. 8 are not necessary included in their entirety, depending on configurations and/or definitions in the system, for example, and some steps may be omitted.

### (Step 8-10) TRP configuration information exchange:

The LMF 8-09 may perform a procedure of receiving information regarding a TRP for positioning service from gNBs 8-03 and 8-05 (for example, NR gNB or LTE eNB), and may transmit and/or receive messages necessary for the procedure of receiving information regarding a TRP for positioning service through an AMF 8-07.

### (Step 8-13) LPP capability transfer:

The LMF 8-09 may request the UE's positioning capability information through an LPP capability transfer procedure with the UE 8-01, and may receive the positioning capability information from the UE.

The serving gNB may determine SRS pre-configuration 8-27 and 8-37 by using at least one of the following two schemes:
(8-20) Option 1: the LMF 8-09 requests the serving gNB to provide an SRS pre-configuration, and the serving gNB again requests neighbour gNBs 8-05 to provide an SRS pre-configuration.
(8-21) NRPPa POSITIONING INFORMATION REQUEST:

If the LMF 8-09 determines to use a positioning service method using an uplink sounding reference signal (SRS) in the UE 8-01 and then wants to start a relevant procedure, the LMF may transmit an NRPPa POSITIONING INFORMATION REQUEST message to the UE's serving gNB through an AMF 8-07 in step 8-21. The NRPPa POSITIONING INFORMATION REQUEST message may include, as a pre-configuration of SRS configuration information to be used by the UE in an RRC_INACTIVE state (hereinafter, referred to as SRS preconfiguration), at least one from among requested SRS transmission characteristics information and requested SRS transmission characteristics for pre-configuration information. The NRPPa POSITIONING INFORMATION REQUEST message may be configured as in the example in Table 1 below:

**[Table 1]**

| **NRPPa POSITIONING INFORMATION REQUEST** | | | | | | |
|---|---|---|---|---|---|---|
| Direction: LMF -> NG-RAN node. | | | | | | |
| **IE/Group Name** | **Presence** | **Range** | **IE type and reference** | **Semantics description** | **Criticality** | **Assigned Criticality** |
| Message Type | M | | 9.2.3 | | YES | reject |
| NRPPa Transaction ID | M | | 9.2.4 | | - | |
| Requested SRS Transmission Characteristics | O | | A.1 | | YES | ignore |
| ... | | | | | | |
| Requested SRS Transmission Characteristics for Pre-Configuration | O | | A.2 | | YES | ignore |
| | | | | | | |

If the NRPPa POSITIONING INFORMATION REQUEST message includes requested SRS transmission SRS characteristics information to request an SRS pre-configuration, requested SRS transmission SRS characteristics (A.1) may be configured as in the example in Table 2 below:

**[Table 2]**

| **A.1 Requested SRS Transmission Characteristics** | | | | | | |
|---|---|---|---|---|---|---|
| **IE/Group Name** | **Presence** | **Range** | **IE Type and Reference** | **Semantics Description** | **Critic ality** | **Assig ned Critic ality** |
| Number Of Periodic Transmissio ns | C-ifResourc eTypePeri odic | | INTEGER (0..500,...) | The number of periodic SRS transmissions requested. The value of '0' represents an infinite number of periodic SRS transmissions. | | |
| [...] | | | | | | |
| **SRS Resource Set List** | | 0.. 1 | | | | |
| **>SRS Resource Set Item** | | *1..*< *maxnoS RS-Resourc eSets>* | | | | |
| >>Number of SRS Resources Per Set | O | | INTEGER (1..16,...) | The number of SRS Resources per resource set for SRS transmission. | | |
| **>>Periodici ty List** | | 0.. 1 | | | | |
| **>>>Periodi city List Item** | | *1..*<*max noSRS-Resourc ePerSet* > | | | | |
| >>>>Period icitySRS | M | | ENUMERATED (0.125, 0.25, 0.5, 0.625, 1, 1.25, 2, 2.5, 4, 5, 8, 10, 16, 20, 32, 40, 64, 80, 160, 320, 640, 1280, 2560, 5120, 10240, ...) | Milli-seconds | | |
| >>Spatial Relation Information | O | | 9.2.34 | This IE is ignored if the *Spatial Relation Information per SRS Resource* IE is present. | | |
| >>Pathloss Reference Information | O | | 9.2.53 | | | |
| >>Spatial Relation Information per SRS Resource | O | | 9.2.60 | | | |
| >>Pre-Configurati on Indication | O | | ENUMERATED (true, ...) | | | |
| >>NR CGI | O | | A.3 | | | |
| [...] | | | | | | |

An indicator (pre-configuration indication) may be included to indicate that the requested SRS transmission SRS characteristics information is for an SRS preconfiguration. In addition, when requesting the serving to provide an SRS preconfiguration, the LMF may request not only the corresponding serving gNB, but also other neighbour gNBs to provide a valid SRS pre-configuration. To this end, each piece of SRS resource set item information in the requested SRS transmission SRS characteristics information may be included to request a pre-configuration of SRS transmission configuration information which the UE can use in each cell (or gNB), and NR CGI information (A.3) may be included together to indicate in which cell (gNB) an SRS pre-configuration is requested by each piece of SRS resource set item information, as in the example in Table 3 below:

**[Table 3]**

| **A.3 NR CGI** | | | | |
|---|---|---|---|---|
| **IE/Group Name** | **Presence** | **Range** | **IE type and reference** | **Semantics description** |
| PLMN Identity | M | | 9.2.8 | |
| NR Cell Identity | M | | BIT STRING (SIZE(36)) | |

On the other hand, if the NRPPa POSITIONING INFORMATION REQUEST message includes requested SRS transmission SRS characteristics for preconfiguration information to request an SRS pre-configuration, the requested SRS Transmission SRS characteristics for pre-configuration information (A.2) may be configured as in the example in Table 4 below:

**[Table 4]**

| **A.2 Requested SRS Transmission Characteristics for Pre-Configuration** | | | | | | |
|---|---|---|---|---|---|---|
| **IE/Group Name** | **Presen ce** | **Range** | **IE Type and Reference** | **Semantics Description** | **Criticali ty** | **Assigned Criticali ty** |
| **Requested SRS Transmission Characteristics for Pre-Configuration List** | | **1** | | | | |
| **> Requested SRS Transmission Characteristics for Pre-Configuration Set Item** | | *1..*< *maxnoReq uestedSRS-Preconfigu ration>* | | | | |
| >>NR-CGI | M | | A.3 | | | |
| >>Requested SRS Transmission Characteristics for Pre-Configuration | O | | A.1 | | | |

When requesting the serving gNB to provide an SRS pre-configuration, the LMF may request not only the corresponding serving gNB, but also other neighbour gNBs to provide a valid SRS pre-configuration. To this end, the requested SRS transmission characteristics for pre-configuration information may include one or multiple pieces of requested SRS transmission characteristics for pre-configuration set item information, and each requested SRS transmission characteristics for preconfiguration set item may include requested SRS transmission characteristics for preconfiguration information for requesting SRS pre-configuration information in a specific cell (or gNB) indicated by NG-CGI. In this case, the requested SRS transmission characteristics for pre-configuration (A.1) information may not include pre-configuration indication and NR-CGI information.

### (8-23) Xn SRS PRECONFIGURATION REQUEST:

Upon receiving a request for an SRS pre-configuration regarding a specific UE 8-01 through an NRPPa POSITIONING INFORMATION REQUEST message from the LMF 8-09 in step 8-21, the serving gNB 8-03 may determine an SRS transmission resource to be included in an SRS pre-configuration to be configured for the UE for a positioning service, based on requested SRS transmission characteristics (for pre-configuration) information included in the NRPPa message 8-21. More specifically, the serving gNB may determine an SRS transmission resource which can be pre-configured for the UE's SRS transmission in the cell operated by the corresponding gNB. In addition, if a request for an SRS pre-configuration in cells operated by other neighbour gNBs 8-05 is received together from the LMF through the NRPPa message 8-21, the serving gNB may request corresponding neighbour gNBs to provide an SRS pre-configuration. To this end, the serving gNB may transmit an Xn SRS PRECONFIGURATION REQUEST message to the neighbour gNBs through an Xn interface. The Xn SRS PRECONFIGURATION REQUEST message may be configured as in the example in Table 5 below:

**[Table 5]**

| **Xn SRS PRECONFIGURATION REQUEST** | | | | | | |
|---|---|---|---|---|---|---|
| Direction: NG-RAN node₁ -> NG-RAN node₂. | | | | | | |
| **IE/Group Name** | **Presence** | **Rang e** | **IE type and reference** | **Semantics descriptio n** | **Criticality** | **Assigned Criticality** |
| Message Type | M | | 9.2.3 | | YES | reject |
| Transaction ID | M | | 9.2.4 | | - | |
| Requested SRS Transmission Characteristics for Pre-Configuration | M | | A.1 | | YES | reject |
| SRS Configuration | O | | B.1 | | YES | reject |

The Xn SRS PRECONFIGURATION REQUEST message may include requested SRS transmission characteristics for pre-configuration information (A.2) for requesting SRS pre-configuration information in cells operated by neighbour gNBs 8-05. Information included in the requested SRS transmission characteristics for pre-configuration information (A.2) has described above with regard to step 8-21. Additionally, after determining an SRS transmission resource which can be preconfigured for the UE's SRS transmission in the cell operated by the corresponding gNB, the serving gNB may include the same in the Xn SRS PRECONFIGURATION REQUEST message as SRS configuration (B.1) information. The neighbour gNBs 8-05 may refer to the SRS configuration (B.1) information when determining preconfigured SRS information for the UE 8-01 according to the request of the serving gNB 8-03. The SRS configuration (B.1) information may be defined as in the example in Table 6 below:

**[Table 6]**

| **B.1 SRS Configuration** | | | | |
|---|---|---|---|---|
| **IE/Group Name** | **Prese nce** | **Range** | **IE Type and Reference** | **Semantics Description** |
| **SRS Carrier List** | | *1* | | |
| **>SRS Carrier List Item** | | *1.. <maxnoSRS -Carriers>* | | |
| >>Point A | M | | INTEGER (0..3279165) | NR ARFCN |
| **>>Uplink Channel BW-PerSCS-List** | | *1* | | SCS-SpecificCarrier TS 38.331 |
| **>>>SCS Specific Carrier** | | *1. . <maxnoSC* Ss> | | |
| >>>>Offset To Carrier | M | | INTEGER(0..2199,... ) | First usable RB to Point A in the number of PRBs |
| >>>>Subcarrier Spacing | M | | ENUMERATED(kH z15, kHz30, kHz60, kHz120,...) | |
| >>>>Carrier Bandwidth | M | | INTEGER(1..275,...) | |
| **>>Active UL BWP** | M | | | Only the configuration in the active UL BWP is needed. |
| >>>Location And Bandwidth | M | | INTEGER(0..37949,. ..) | BWP TS 38.331 |
| >>>Subcarrier Spacing | M | | ENUMERATED(kH z15, kHz30, kHz60, kHz120,...) | |
| >>>Cyclic Prefix | M | | ENUMERATED(Nor mal, Extended) | |
| >>>Tx Direct Current Location | M | | INTEGER(0..3301,... ) | |
| >>>Shift7dot5kHz | O | | ENUMERATED(true ,...) | |
| >>>SRS Config | M | | | *SRS-Config* as defined in TS 38.331 |
| **>>>>SRS Resource List** | | *0.. <maxnoSRS -Resources>* | | |
| >>>>>SRS Resource | M | | 9.2.29 | *SRS-Resource* as defined in TS 38.331 |
| **>>>>Positioning SRS Resource List** | | *0..*< ***maxnoSRS-**PosResources* > | | |
| >>>>>Positioning SRS Resource | M | | 9.2.30 | *SRS-PosResource-r16* as defined in TS 38.331 |
| **>>>>SRS Resource Set List** | | *0.. <maxnoSRS ResourceSets>* | | |
| >>>>>SRS Resource Set | M | | 9.2.31 | *SRS-ResourceSet as* defined in TS 38.331 |
| **>>>>Positioning SRS Resource Set List** | | *0.. <maxnoSRS* - *PosResourceS ets>* | | |
| >>>>>Positioning SRS Resource Set | M | | 9.2.32 | *SRS-PosResourceSet-r16* as defined in TS 38.331 |
| >>NR PCI | O | | INTEGER (0..1007) | Physical Cell ID of the cell that contains the SRS carrier |

### (8-25) Xn SRS PRECONFIGURATION RESPONSE:

The neighbour gNBs 8-05, which have been requested to provide an SRS pre-configuration in step 8-23, may determine an SRS transmission resource to be pre-configured, based on information in the Xn SRS PRECONFIGURATION REQUEST message. Thereafter, pre-configured SRS configuration information may be included in an Xn SRS PRECONFIGURATION RESPONSE message and then sent to the serving gNB as a response. The pre-configured SRS configuration information may be included in the Xn SRS PRECONFIGURATION RESPONSE as in the example in Table 7 below:

**[Table 7]**

| **Xn SRS PRECONFIGURATION RESPONSE** | | | | | | |
|---|---|---|---|---|---|---|
| Direction: NG-RAN node₂ -> NG-RAN node₁. | | | | | | |
| **IE/Group Name** | **Presence** | **Rang e** | **IE type and reference** | **Semantics description** | **Criticali ty** | **Assigned Criticali ty** |
| Message Type | M | | 9.2.3 | | YES | reject |
| Transaction ID | M | | 9.2.4 | | - | |
| Pre-configured SRS Configuration | M | | B.1 | | YES | reject |
| Criticality Diagnostics | O | | 9.2.2 | | YES | ignore |

If the neighbour gNBs 8-05, which have been requested to provide an SRS pre-configuration in step 8-23, cannot determine an SRS transmission resource to be pre-configured, based on information in the Xn SRS PRECONFIGURATION REQUEST message, the same may inform the serving gNB 8-03 that pre-configured SRS transmission resources cannot be allocated as requested through an Xn SRS PRECONFIGURATION FAILURE message. The Xn SRS PRECONFIGURATION FAILURE message may be defined as in the embodiment in Table 8 below:

**[Table 8]**

| **Xn SRS PRECONFIGURATION FAILURE** | | | | | | |
|---|---|---|---|---|---|---|
| Direction: NG-RAN node₂ -> NG-RAN node₁. | | | | | | |
| **IE/Group Name** | **Presence** | **Range** | **IE type and reference** | **Semantics description** | **Criticality** | **Assigned Criticality** |
| Message Type | M | | 9.2.3 | | YES | reject |
| Transaction ID | M | | 9.2.4 | | - | |
| Cause | M | | 9.2.1 | | YES | ignore |
| Criticality Diagnostics | O | | 9.2.2 | | YES | ignore |

### (8-27) UE SRS configuration:

The serving gNB 8-03 may configure multiple pre-configured SRS configurations for the UE such that the UE 8-01 later performs SRS transmission in an RRC_INACTIVE state for the sake of a positioning service. The UE SRS configuration may include an SRS transmission resource determined to be preconfigured for the UE's SRS transmission in the cell operated by the corresponding gNB, based on information included in the NRPPa POSITIONING INFORMATION REQUEST received by the serving gNB in step 8-21, and SRS transmission resources included in pre-configured SRS configuration information received from neighbour gNBs as a response in step 8-25. The detailed method in which the serving gNB configures a UE SRS configuration including multiple pre-configured SRS configurations and transfers the same to the UE has been described above with reference to the embodiment in FIG. 6.

### (8-29) NRPPa POSITIONING INFORMATION RESPONSE:

The serving gNB 8-03 may send an NRPPa POSITIONING INFORMATION RESPONSE message in response to the NRPPa POSITIONING INFORMATION REQUEST message received from the LMF 8-09 in step 8-21. In response to the request for SRS pre-configuration received in step 8-21, the serving gNB may include the SRS pre-configuration information, which has been configured for the UE 8-01 in step 8-27, in the NRPPa POSITIONING INFORMATION RESPONSE message as pre-configured SRS configuration list information as in the example in Table 9 below:

**[Table 9]**

| **NRPPa POSITIONING INFORMATION RESPONSE** | | | | | | |
|---|---|---|---|---|---|---|
| Direction: NG-RAN node -> LMF. | | | | | | |
| **IE/Group Name** | **Presence** | **Range** | **IE type and reference** | **Semantics description** | **Criti cality** | **Assigned Criticali ty** |
| Message Type | M | | 9.2.3 | | YES | reject |
| NRPPa Transaction ID | M | | 9.2.4 | | - | |
| SRS Configuration | O | | 9.2.28 | | YES | ignore |
| SFN Initialisation Time | O | | Relative Time 1900 9.2.36 | | YES | ignore |
| Criticality Diagnostics | O | | 9.2.2 | | YES | ignore |
| UE Tx TEG Association List | O | | 9.2.78 | | YES | ignore |
| Pre-Configured SRS Configuration List | O | | C.1 | | YES | ignore |

Pre-configured SRS configuration list (C.1) information included in the NRPPa POSITIONING INFORMATION RESPONSE may include one or multiple pieces of pre-configured SRS configuration information (pre-configured SRS transmission resource information), and each SRS transmission resource may be valid in the cell indicated through NR-CGI information. The pre-configured SRS configuration list (C.1) information may be defined as in the example in Table 10 below:

**[Table 10]**

| **C.1 Pre-Confioured SRS Configuration List** | | | | | | |
|---|---|---|---|---|---|---|
| **IE/Group Name** | **Prese nce** | **Range** | **IE Type and Reference** | **Semantics Description** | **Criti cality** | **Assign ed Critica lity** |
| **Pre-Configured SRS Configuration List** | | *1* | | | | |
| > **Pre-Configured SRS Configuration Item** | | *1.. < maxnoSRS-Preconfiguratio n>* | | | | |
| >>NR-CGI | M | | A.3 | | | |
| >>Pre-Configured SRS Configuration | O | | B.1 | | | |

(8-30) Option 2: the LMF 8-09 request a neighbour gNB 8-05 to provide an SRS pre-configuration and transfers the result of the serving gNB 8-03.

### (8-31) NRPPa POSITIONING INFORMATION REQUEST:

The LMF 8-09 may request the serving gNB 8-03 and a neighbour gNB 8-05 to provide a pre-configuration of an SRS transmission resource which can be used by the UE 8-01 for SRS transmission in an RRC_INACTIVE state. To this end, the LMF 8-09 may transmit an NRPPa POSITIONING INFORMATION REQUEST to the serving gNB 8-03 and a neighbour gNB 8-05. For reference, the serving gNB may be requested to provide an SRS pre-configuration by an NRPPa POSITIONING INFORMATION REQUEST message transmitted by the LMF in step 8-35 (described below). In this case, the LMF may omit NRPPa POSITIONING INFORMATION REQUEST message transmission regarding the serving gNB in step 8-31. The NRPPa POSITIONING INFORMATION REQUEST message may include at least one from among requested SRS transmission characteristics information and requested SRS transmission characteristics for pre-configuration information, as a pre-configuration of SRS configuration information (hereinafter, referred to as SRS pre-configuration) to be used by the UE in an RRC _INACTIVE state. The NRPPa POSITIONING INFORMATION REQUEST message may be configured as in the example in Table 11 below:

**[Table 11]**

| **NRPPa POSITIONING INFORMATION REQUEST** | | | | | | |
|---|---|---|---|---|---|---|
| Direction: LMF -> NG-RAN node. | | | | | | |
| **IE/Group Name** | **Prese nce** | **Range** | **IE type and reference** | **Semantics description** | **Criticality** | **Assigned Criticality** |
| Message Type | M | | 9.2.3 | | YES | reject |
| NRPPa Transaction ID | M | | 9.2.4 | | - | |
| Requested SRS Transmission Characteristics | O | | A.1a | | YES | ignore |
| [...] | | | | | | |
| Requested SRS Transmission Characteristics for Pre-Configuration | O | | A.1b | | YES | ignore |
| Pre-Configured SRS Configuration List | O | | C.1 | | YES | ignore |

If the NRPPa POSITIONING INFORMATION REQUEST message includes requested SRS transmission SRS characteristics information in order to request an SRS pre-configuration, requested SRS Transmission SRS characteristics (A.1a) may be configured as in the example in Table 12 below:

**[Table 12]**

| **A.1a Requested SRS Transmission Characteristics** | | | | | | |
|---|---|---|---|---|---|---|
| **IE/Group Name** | **Presence** | **Range** | **IE Type and Reference** | **Semantics Description** | **Critica lity** | **Assigned Criticali** ty |
| Number Of Periodic Transmissi ons | C-ifResour ceTypeP eriodic | | INTEGER (0..500,...) | The number of periodic SRS transmissions requested. The value of '0' represents an infinite number of periodic SRS transmissions. | | |
| [...] | | | | | | |
| **SRS Resource Set List** | | *0.. 1* | | | | |
| **>SRS Resource Set Item** | | *1..*< *maxnoS RS-Resour ceSets* > | | | | |
| >>Number of SRS Resources | O | | INTEGER (1..16,...) | The number of SRS Resources per resource set | | |
| Per Set | | | | for SRS transmission. | | |
| **>>Periodi city List** | | *0.. 1* | | | | |
| **>>>Period icity List Item** | | *1..<ma xnoSRS Resour cePerS et>* | | | | |
| >>>>Perio dicitySRS | M | | ENUMERATED (0.125, 0.25, 0.5, 0.625, 1, 1.25, 2, 2.5, 4, 5, 8, 10, 16, 20, 32, 40, 64, 80, 160, 320, 640, 1280, 2560, 5120, 10240, ...) | Milli-seconds | | |
| >>Spatial Relation Informatio n | O | | 9.2.34 | This IE is ignored if the *Spatial Relation Information per SRS Resource* IE is present. | | |
| >>Pathloss Reference Informatio n | O | | 9.2.53 | | | |
| >>Spatial Relation Informatio n per SRS Resource | O | | 9.2.60 | | | |
| >>Pre-Configuration Indication | O | | ENUMERATED (true, ...) | | | |

An indicator (pre-configuration indication) may be included to indicate that the requested SRS transmission SRS characteristics information is for an SRS preconfiguration.

On the other hand, if the NRPPa POSITIONING INFORMATION REQUEST message includes requested SRS transmission SRS characteristics for preconfiguration information to request an SRS pre-configuration, the requested SRS transmission characteristics for pre-configuration information may be configured as (A.1a) above. In this case, the existence of requested SRS transmission SRS characteristics for pre-configuration information itself means a pre-configuration request, and no indicator (pre-configuration indication) may thus be included to indicate a request for an SRS pre-configuration.

### (8-33) NRPPa POSITIONING INFORMATION RESPONSE:

The serving gNB 8-03 and a neighbour gNB 8-05 may determine a preconfigured SRS configuration to be configured for the UE 8-01 for a positioning service, based on information in the NRPPa POSITIONING INFORMATION REQUEST message received form the LMF 8-09 in step 8-31. More specifically, the serving gNB and neighbour gNBs may determine an SRS transmission resource which can be pre-configured for the UE's SRS transmission in the cell operated by the corresponding gNB, may include the same in an NRPPa POSITIONING INFORMATION RESPONSE as pre-configured SRS configuration information, and may send the same to the LMF. The NRPPa POSITIONING INFORMATION RESPONSE may be configured as in the example in Table 13 below:

**[Table 13]**

| **NRPPa POSITIONING INFORMATION RESPONSE** | | | | | | |
|---|---|---|---|---|---|---|
| Direction: NG-RAN node -> LMF. | | | | | | |
| **IE/Group Name** | **Presence** | **Range** | **IE type and reference** | **Semantics description** | **Criti cality** | **Assigned Criticality** |
| Message Type | M | | 9.2.3 | | YES | reject |
| NRPPa Transaction ID | M | | 9.2.4 | | - | |
| SRS Configuration | O | | 9.2.28 | | YES | ignore |
| SFN Initialisation Time | O | | Relative Time 1900 | | YES | ignore |
| | | | 9.2.36 | | | |
| Criticality Diagnostics | O | | 9.2.2 | | YES | ignore |
| UE Tx TEG Association List | O | | 9.2.78 | | YES | ignore |
| Pre-Configured SRS Configuration | O | | B.1 | | YES | ignore |

The pre-configured SRS configuration information (B.1) may be configured as in the example in Table 14 below:

**[Table 14]**

| **B.1 SRS Configuration** | | | | |
|---|---|---|---|---|
| **IE/Group Name** | **Prese nce** | **Range** | **IE Type and Reference** | **Semantics Description** |
| **SRS Carrier List** | | *1* | | |
| **>SRS Carrier List Item** | | *1.. <maxnoSRS -Carriers>* | | |
| >>Point A | M | | INTEGER (0..3279165) | NR ARFCN |
| **>>Uplink Channel BW-PerSCS-List** | | *1* | | SCS-SpecificCarrier TS 38.331 |
| **>>>SCS Specific Carrier** | | *1. . <maxnoSC* Ss> | | |
| >>>>Offset To Carrier | M | | INTEGER(02199,. ..) | First usable RB to Point A in the number of PRBs |
| >>>>Subcarrier Spacing | M | | ENUMERATED(k Hz15, kHz30, kHz60, kHz120,...) | |
| >>>>Carrier Bandwidth | M | | INTEGER(1..275,... ) | |
| **>>Active UL BWP** | M | | | Only the configuration in the active UL BWP is needed. |
| >>>Location And Bandwidth | M | | INTEGER(0..37949 ,...) | BWP TS 38.331 |
| >>>Subcarrier Spacing | M | | ENUMERATED(k Hz15, kHz30, kHz60, kHz120,...) | |
| >>>Cyclic Prefix | M | | ENUMERATED(N ormal, Extended) | |
| >>>Tx Direct Current Location | M | | INTEGER(0..3301,. ..) | |
| >>>Shift7dot5kHz | O | | ENUMERATED(tr ue,...) | |
| >>>SRS Config | M | | | *SRS-Config* as defined in TS 38.331 |
| **>>>>SRS Resource List** | | *0.. <maxnoSRS -Resources>* | | |
| >>>>>SRS Resource | M | | 9.2.29 | *SRS-Resource* as defined in TS 38.331 |
| **>>>>Positioning SRS Resource List** | | *0..*< *maxnoSRS-PosResources* > | | |
| >>>>>Positioning SRS Resource | M | | 9.2.30 | *SRS-PosResource-r16* as defined in TS 38.331 |
| **>>>>SRS Resource Set List** | | *0..*<*maxnoSRS* - *ResourceSets* > | | |
| >>>>>SRS Resource Set | M | | 9.2.31 | *SRS-ResourceSet* as defined in TS 38.331 |
| **>>>>Positioning SRS Resource Set List** | | *0.. <maxnoSRS* - *PosResourceS ets>* | | |
| >>>>>Positioning SRS Resource Set | M | | 9.2.32 | *SRS-PosResourceSet-r16* as defined in TS 38.331 |
| >>NR PCI | O | | INTEGER (0..1007) | Physical Cell ID of the cell that contains the SRS carrier |

### (8-35) NRPPa POSITIONING INFORMATION REQUEST:

The LMF 8-09 may request the serving gNB 8-03 to perform an SRS preconfiguration for the UE 8-01 for the sake of a positioning service in step 8-33. To this end, the LMF may transmit an NRPPa POSITIONING INFORMATION REQUEST message to the serving gNB. The LMF may include pre-configured SRS configuration information collected from respective gNBs in step 8-33 in the NRPPa POSITIONING INFORMATION REQUEST message as pre-configured SRS configuration list information. In addition, if the LMF has not request the serving gNB to provide an SRS pre-configuration in step 8-31, the LMF may include requested SRS transmission characteristics information in the NRPPa POSITIONING INFORMATION REQUEST message in order to request the serving gNB to provide an SRS pre-configuration in step 8-35. The NRPPa POSITIONING INFORMATION REQUEST message may be configured as in the example in Table 15 below:

**[Table 15]**

| **NRPPa POSITIONING INFORMATION REQUEST** | | | | | | |
|---|---|---|---|---|---|---|
| Direction: LMF -> NG-RAN node. | | | | | | |
| **IE/Group Name** | **Prese nce** | **Range** | **IE type and reference** | **Semantics description** | **Criticality** | **Assigned Criticality** |
| Message Type | M | | 9.2.3 | | YES | reject |
| NRPPa Transaction ID | M | | 9.2.4 | | - | |
| Requested SRS Transmission Characteristics | O | | A.1 | | YES | ignore |
| [...] | | | | | | |
| Requested SRS Transmission Characteristics for Pre-Configuration | O | | A.1 | | YES | ignore |
| Pre-Configured SRS Configuration List | O | | C.1 | | YES | ignore |

The pre-configured SRS configuration list (C.1) information included in the NRPPa POSITIONING INFORMATION RESPONSE may include one or multiple pieces of pre-configured SRS configuration information (pre-configured SRS transmission resource information), and each SRS transmission resource may be valid in the cell indicated through NR-CGI information. The pre-configured SRS configuration list (C.1) information may be configured as in the example in Table 16 below:

**[Table 16]**

| **C.1 Pre-Confioured SRS Configuration List** | | | | | | |
|---|---|---|---|---|---|---|
| **IE/Group Name** | **Prese nce** | **Range** | **IE Type and Reference** | **Semantics Description** | **Criticali ty** | **Assigned Criticality** |
| **Pre-Configured SRS Configuration List** | | *1* | | | | |
| > **Pre-Configured SRS Configuration Item** | | *1..*< *maxnoSR S-Preconfi guration* > | | | | |
| >>NR-CGI | M | | A.3 | | | |
| >>Pre-Configured SRS Configuration | O | | B.1 | | | |

### (8-37) UE SRS configuration:

The serving gNB 8-03 may configure multiple pre-configured SRS configurations for the UE such that the UE 8-01 performs SRS transmission later in an RRC_INACTIVE state for a positioning service. The UE SRS configuration may include an SRS transmission resource determined to be pre-configured for the UE's SRS transmission in the cell operated by the corresponding gNB, based on information included in the NRPPa POSITIONING INFORMATION REQUEST received by the serving gNB in step 8-35, and SRS transmission resources included in pre-configured SRS configuration information transferred from the LMF in step 8-35. The detailed method in which the serving gNB configures the UE SRS configuration information and transfers the same to the UE has been described above with reference to the embodiment in FIG. 6.

### (8-39) NRPPa POSITIONING INFORMATION RESPONSE:

The serving gNB 8-03 may send an NRPPa POSITIONING INFORMATION RESPONSE message in response to the NRPPa POSITIONING INFORMATION REQUEST message received from the LMF 8-09 in step 8-35. In response to the request for SRS pre-configuration received in step 8-35, the serving gNB may include the SRS pre-configuration information, which has been configured for the UE 8-01 in step 8-37, in the NRPPa POSITIONING INFORMATION RESPONSE message as pre-configured SRS configuration information as in the example in Table 17 below:

**[Table 17]**

| **NRPPa POSITIONING INFORMATION RESPONSE** | | | | | | |
|---|---|---|---|---|---|---|
| Direction: NG-RAN node -> LMF. | | | | | | |
| **IE/Group Name** | **Prese nce** | **Rang e** | **IE type and reference** | **Semantics descriptio n** | **Criticality** | **Assigned Criticality** |
| Message Type | M | | 9.2.3 | | YES | reject |
| NRPPa Transaction ID | M | | 9.2.4 | | - | |
| SRS Configuration | O | | 9.2.28 | | YES | ignore |
| SFN Initialisation Time | O | | Relative Time 1900 9.2.36 | | YES | ignore |
| Criticality Diagnostics | O | | 9.2.2 | | YES | ignore |
| UE Tx TEG Association List | O | | 9.2.78 | | YES | ignore |
| Pre-Configured SRS Configuration | O | | B.1 | | YES | ignore |

The pre-configured SRS configuration information (B.1) may be configured as in the example in Table 18 below:

**[Table 18]**

| **B.1 SRS Configuration** | | | | |
|---|---|---|---|---|
| **IE/Group Name** | **Prese nce** | **Range** | **IE Type and Reference** | **Semantics Description** |
| **SRS Carrier List** | | *1* | | |
| **>SRS Carrier List Item** | | *1.. <maxnoSRS -Carriers>* | | |
| >>Point A | M | | INTEGER (0..3279165) | NR ARFCN |
| **>>Uplink Channel BW-PerSCS-List** | | *1* | | SCS-SpecificCarrier TS 38.331 |
| **>>>SCS Specific Carrier** | | *1. . <maxnoSC* Ss> | | |
| >>>>Offset To Carrier | M | | INTEGER(0..2199,...) | First usable RB to Point A in the number of PRBs |
| >>>>Subcarrier Spacing | M | | ENUMERATED(kHz15, kHz30, kHz60, kHz120,...) | |
| >>>>Carrier Bandwidth | M | | INTEGER(1..275,...) | |
| **>>Active UL BWP** | M | | | Only the configuration in the active UL BWP is needed. |
| >>>Location And Bandwidth | M | | INTEGER(0..37949,...) | BWP TS 38.331 |
| >>>Subcarrier Spacing | M | | ENUMERATED(kHz15, kHz30, kHz60, kHz120,...) | |
| >>>Cyclic Prefix | M | | ENUMERATED(Norma 1, Extended) | |
| >>>Tx Direct Current Location | M | | INTEGER(0..3301,...) | |
| >>>Shift7dot5kH z | O | | ENUMERATED(true,...) | |
| >>>SRS Config | M | | | *SRS-Config* as defined in TS 38.331 |
| **>>>>SRS Resource List** | | *0.. <maxnoSRS -Resources>* | | |
| >>>>>SRS Resource | M | | 9.2.29 | *SRS-Resource* as defined in TS 38.331 |
| **>>>>Positioning SRS Resource List** | | *0..*< ***maxnoSRS-**PosResources* > | | |
| >>>>>Positioning SRS Resource | M | | 9.2.30 | *SRS-PosResource-r16* as defined in TS 38.331 |
| **>>>>SRS Resource Set List** | | *0..<maxnoSRS* - *ResourceSets>* | | |
| >>>>>SRS Resource Set | M | | 9.2.31 | *SRS-ResourceSet* as defined in TS 38.331 |
| **>>>>Positioning SRS Resource Set List** | | *0.. <maxnoSRS* - *PosResourceS ets>* | | |
| >>>>>Positioning SRS Resource Set | M | | 9.2.32 | *SRS-PosResourceSet-r16* as defined in TS 38.331 |
| >>NR PCI | O | | INTEGER (0..1007) | Physical Cell ID of the cell that contains the SRS carrier |

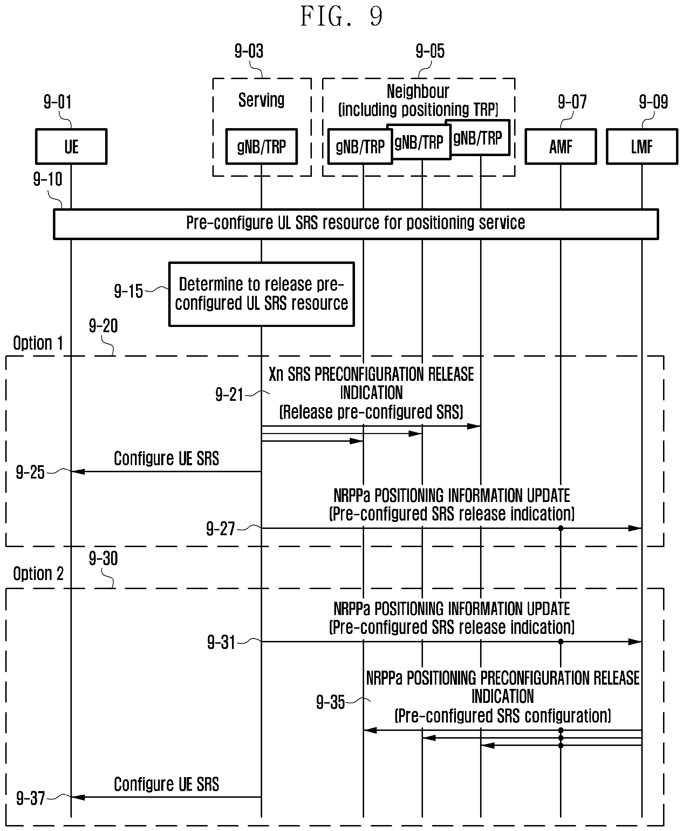

FIG. 9 illustrates a procedure in which a gNB according to an embodiment of the disclosure releases SRS configuration information pre-configured for a UE.

The serving gNB 9-03 may determine to release a pre-configured SRS configuration which has been configured for the UE 9-01 for the sake of a positioning service. FIG. 9 illustrates a procedure in which, if the serving gNB 9-03 wants to release a pre-configured SRS configuration that has been configured for the UE according to step 5-10 in FIG. 5 and/or the embodiment in FIG. 8, gNBs 9-05 that reserve SRS transmission resources included in the pre-configured SRS configuration are instructed to release the SRS transmission resources. According to the embodiment in FIG. 9, it is possible to solve the problem in that, even if the serving gNB has instructed the UE to release the pre-configured SRS configuration, other gNBs 9-05 unnecessary reserve the SRS transmission resources. The steps illustrated in FIG. 9 are not necessary included in their entirety, depending on configurations and/or definitions in the system, for example, and some steps may be omitted.

### (9-10) Pre-configure UL SRS resource for positioning service:

The serving gNB 9-03 may pre-configure multiple pre-configured SRS configurations needed by the UE 9-01 to perform SRS transmission in an RRC_INACTIVE state for the sake of a positioning service as in the embodiment in FIG. 8. In other words, the serving gNB may pre-configure multiple SRS transmission resources for the UE.

### (9-15) gNB determines release of pre-configured UL SRS resources:

The serving gNB may determine to release all or some of the multiple pre-configured SRS configurations configured for the UE in step 9-10. The gNB may autonomously determine to release the pre-configured SRS configurations for efficient use of uplink transmission resources. In addition, although omitted in this embodiment, the UE or LMF 9-09 may request the serving gNB to release corresponding pre-configured SRS configurations.

If the serving gNB 9-03 may determine to release all or some of the multiple pre-configured SRS configurations configured for the UE 9-01, the same needs to be able to instruct other gNBs, which reserve SRS transmission resource corresponding to the pre-configured SRS configurations, to release the pre-configured SRS configurations. At least one of the following two options may be used as a specific method to this end.

(9-20) Option 1: the serving gNB 9-03 instructs a neighbour gNB 9-05 to release a pre-configured SRS configuration through an Xn interface.

### (9-21) Xn SRS PRECONFIGURATION RELEASE INDICATION:

The serving gNB may transmit an Xn SRS PRECONFIGURATION RELEASE INDICATION message to neighbour gNBs 9-05 through an Xn interface, thereby instructing to release all or some of the multiple pre-configured SRS configurations configured for the UE in step 9-10. The Xn SRS PRECONFIGURATION RELEASE INDICATION message may be configured as in the example in Table 19 below:

**[Table 19]**

| **Xn SRS PRECONFIGURATION RELEASE INDICATION** | | | | | | |
|---|---|---|---|---|---|---|
| Direction: NG-RAN node₁ -> NG-RAN node₂. | | | | | | |
| **IE/Group Name** | **Prese nce** | **Range** | **IE type and reference** | **Semantics description** | **Criticality** | **Assigned Criticality** |
| Message Type | M | | 9.2.3 | | YES | reject |
| Transaction ID | M | | 9.2.4 | | - | |
| Pre-Configured SRS Release List | M | | D.1 | | YES | reject |

The serving gNB may include pre-configured SRS configurations to be released in the Xn SRS PRECONFIGURATION RELEASE INDICATION message as pre-configured SRS release list information. The pre-configured SRS release list information (D,1) may be configured as in the example in Table 20 below:

**[Table 20]**

| **D.1 Pre-Confioured SRS Release List** | | | | | | |
|---|---|---|---|---|---|---|
| This IE contains the requested SRS configuration for the UE. | | | | | | |
| **IE/Group Name** | **Pre sen ce** | **Range** | **IE Type and Reference** | **Semantics Description** | **Critica lity** | **Assigned Criticali ty** |
| **Pre-Configured SRS Release List** | | *1* | | | | |
| > **Pre-Configured SRS Release Item** | | *1*..< *maxnoSRS-Preconfigurati on>* | | | | |
| >>NR-CGI | O | | A.3 | | | |
| >>Pre-Configured SRS Configuration | O | | B.1 | | | |

### (9-25) UE SRS Configuration:

If the serving gNB has decided to release all or some of the multiple pre-configured SRS configurations configured for the UE in step 9-15, the serving gNB may configure changed UE SRS configuration information for the UE.

### (9-27) NRPPa POSITIONING INFORMATION UPDATE:

If the serving gNB has decided to release all or some of the multiple pre-configured SRS configurations configured for the UE in step 9-15, the serving gNB may report the released pre-configured SRS configurations to the LMF. To this end, the released pre-configured SRS configurations may be included in an NRPPa POSITIONING INFORMATION UPDATE message as pre-configured SRS release list information. The NRPPa POSITIONING INFORMATION UPDATE message may be configured as in the example in Table 21 below:

**[Table 21]**

| **NRPPa POSITIONING INFORMATION UPDATE** | | | | | | |
|---|---|---|---|---|---|---|
| Direction: NG-RAN node -> LMF. | | | | | | |
| **IE/Group Name** | **Pre sen ce** | **Range** | **IE type and reference** | **Semantics description** | **Criticali ty** | **Assigned Criticality** |
| Message Type | M | | 9.2.3 | | YES | ignore |
| NRPPa Transaction ID | M | | 9.2.4 | | - | |
| SRS Configuration | O | | C.1 | | YES | ignore |
| SFN Initialisation Time | O | | Relative Time 1900 9.2.36 | | YES | ignore |
| UE Tx TEG Association List | O | | 9.2.78 | | YES | ignore |
| Pre-Configured SRS Release List | O | | D.1 | | YES | reject |

The pre-configured SRS release list information (D.1) may be configured as in the example in Table 22 below:

**[Table 22]**

| **D.1 Pre-Confioured SRS Release List** | | | | | | |
|---|---|---|---|---|---|---|
| This IE contains the requested SRS configuration for the UE. | | | | | | |
| **IE/Group Name** | **Pre sen ce** | **Range** | **IE Type and Reference** | **Semantics Description** | **Criti cality** | **Assigned Criticality** |
| **Pre-Configured SRS Release List** | | *1* | | | | |
| **> Pre-Configured SRS Release Item** | | *1..< maxnoSRS-Preconfiguratio n>* | | | | |
| >>NR-CGI | O | | A.3 | | | |
| >>Pre-Configured SRS Configuration | O | | B.1 | | | |

(9-30) Option 2: the serving gNB 9-03 instructs the LMF 9-09 to release a pre-configured SRS configuration, and the LMF again instructs neighbour gNBs 9-05 to release the pre-configured SRS configuration

### (9-31) NRPPa POSITIONING INFORMATION UPDATE:

If the serving gNB has decided to release all or some of the multiple pre-configured SRS configurations configured for the UE in step 9-15, the serving gNB may instruct the LMF to release the pre-configured SRS configurations. To this end, the pre-configured SRS configurations to be released may be included in an NRPPa POSITIONING INFORMATION UPDATE message as pre-configured SRS release list information. The NRPPa POSITIONING INFORMATION UPDATE message may be configured as in the example in Table 23 below:

**[Table 23]**

| **NRPPa POSITIONING INFORMATION UPDATE** | | | | | | |
|---|---|---|---|---|---|---|
| Direction: NG-RAN node -> LMF. | | | | | | |
| **IE/Group Name** | **Prese nce** | **Range** | **IE type and reference** | **Semantics description** | **Criti cality** | **Assigned Criticality** |
| Message Type | M | | 9.2.3 | | YES | ignore |
| NRPPa Transaction ID | M | | 9.2.4 | | - | |
| SRS Configuration | O | | C.1 | | YES | ignore |
| SFN Initialisation Time | O | | Relative Time 1900 9.2.36 | | YES | ignore |
| UE Tx TEG Association List | O | | 9.2.78 | | YES | ignore |
| Pre-Configured SRS Release List | O | | D.1 | | YES | reject |

The pre-configured SRS release list information (D.1) may be configured as in the example in Table 24 below:

**[Table 24]**

| **D.1 Pre-Confioured SRS Release List** | | | | | | |
|---|---|---|---|---|---|---|
| This IE contains the requested SRS configuration for the UE. | | | | | | |
| **IE/Group Name** | **Prese nce** | **Range** | **IE Type and Reference** | **Semantics Description** | **Criti cality** | **Assigned Criticality** |
| **Pre-Configured SRS Release List** | | 1 | | | | |
| **> Pre-Configured SRS Release Item** | | *1..< maxnoSRS-Preconfiguratio n>* | | | | |
| >>NR-CGI | O | | A.3 | | | |
| >>Pre-Configured SRS Configuration | O | | B.1 | | | |

### (9-35) NRPPa POSITIONING PRECONFIGURATION RELEASE INDICATIONXn SRS PRECONFIGURATION RELEASE INDICATION:

The LMF may perform a procedure of releasing pre-configured SRS configurations included in the pre-configured SRS release list in the NRPPa POSITIONING INFORMATION UPDATE message received from the serving gNB in step 9-31. To this end, the LMF may send an NRPPa POSITIONING PRECONFIGURATION RELEASE INDICATION message to relevant gNBs which reserve pre-configured SRS configurations, release of which has been indicated by the serving gNB in step 9-31, thereby indicating release of the pre-configured SRS configurations. To this end, the pre-configured SRS configurations to be released may be included in the NRPPa POSITIONING PRECONFIGURATION RELEASE INDICATION message as pre-configured SRS release list information, as in the example in Table 25 below:

**[Table 25]**

| **NRPPa POSITIONING PRECONFIGURATION RELEASE INDICATION** | | | | | | |
|---|---|---|---|---|---|---|
| Direction: LMF -> NG-RAN node. | | | | | | |
| **IE/Group Name** | **Prese nce** | **Ra nge** | **IE type and reference** | **Semantics description** | **Criticality** | **Assigned Criticality** |
| Message Type | M | | 9.2.3 | | YES | reject |
| Transaction ID | M | | 9.2.4 | | - | |
| Pre-Configured SRS Release List | M | | D.1 | | YES | reject |

The pre-configured SRS release list information (D.1) may be configured as in the example in Table 26 below:

**[Table 26]**

| **D.1 Pre-Confioured SRS Release List** | | | | | | |
|---|---|---|---|---|---|---|
| This IE contains the requested SRS configuration for the UE. | | | | | | |
| **IE/Group Name** | **Prese nce** | **Range** | **IE Type and Reference** | **Semantics Description** | **Critica lity** | **Assigned Criticali ty** |
| **Pre-Configured SRS Release List** | | *1* | | | | |
| **> Pre-Configured SRS Release Item** | | *1*..< ***maxnoSRS-**Preconfigur ation>* | | | | |
| >>NR-CGI | O | | A.3 | | | |
| >>Pre-Configured SRS Configuration | O | | B.1 | | | |

### (9-37) UE SRS Configuration:

If the serving gNB has decided to release all or some of the multiple pre-configured SRS configurations configured for the UE in step 9-15, the serving gNB may configure changed UE SRS configuration information for the UE.

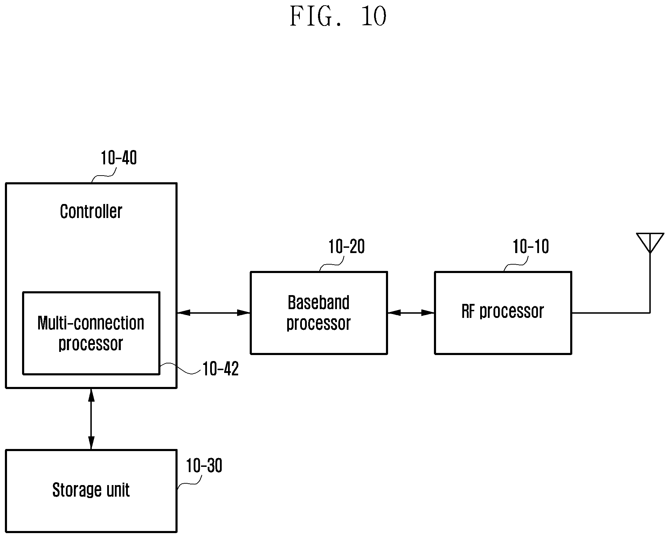

FIG. 10 is a block diagram illustrating the internal structure of a UE according to an embodiment of the disclosure.

Referring to FIG. 10, the UE may include a radio frequency (RF) processor 10-10, a baseband processor 10-20, a storage unit 10-30, and a controller 10-40.

The RF processor 10-10 may perform functions for transmitting/receiving signals through a radio channel, such as signal band conversion and amplification. That is, the RF processor 10-10 may up-convert a baseband signal provided from the baseband processor 10-20 to an RF band signal, may transmit the same through an antenna, and may down-convert an RF band signal received through the antenna to a baseband signal. For example, the RF processor 10-10 may include a transmission filter, a reception filter, an amplifier, a mixer, an oscillator, a digital-to-analog converter (DAC), an analog-to-digital converter (ADC), and the like. Although only one antenna is illustrated in FIG. 10, the UE may include multiple antennas. In addition, the RF processor 10-10 may include multiple RF chains. Furthermore, the RF processor 10-10 may perform beamforming. For the beamforming, the RF processor 10-10 may adjust the phase and magnitude of signals transmitted/received through multiple antennas or antenna elements, respectively. In addition, the RF processor may perform MIMO, and may receive multiple layers when performing a MIMO operation.

The baseband processor 10-20 may perform functions of conversion between baseband signals and bitstrings according to the system's physical layer specifications. For example, during data transmission, the baseband processor 10-20 may encode and modulate a transmitted bitstring to generate complex symbols. In addition, during data reception, the baseband processor 10-20 may demodulate and decode a baseband signal provided from the RF processor 10-10 to restore a received bitstring. For example, when following the orthogonal frequency division multiplexing (OFDM) scheme, during data transmission, the baseband processor 10-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 10-20 may split a baseband signal provided from the RF processor 10-10 at the OFDM symbol level, may restore signals mapped to subcarriers through a fast Fourier transform (FFT) operation, and may restore a received bitstring through demodulation and decoding.

The baseband processor 10-20 and the RF processor 10-10 may transmit and receive signals as described above. Therefore, the baseband processor 10-20 and the RF processor 10-10 may be referred to as a transmitter, a receiver, a transceiver, or a communication unit. Furthermore, at least one of the baseband processor 10-20 and the RF processor 10-10 may include multiple communication modules to support multiple different radio access technologies. In addition, at least one of the baseband processor 10-20 and the RF processor 10-10 may include different communication modules to process signals in different frequency bands. For example, the different radio access technologies may include wireless LANs (for example, IEEE 802.11), cellular networks (for example, LTE), and the like. In addition, the different frequency bands may include a super high frequency (SHF) (for example, 2.NRHz, NRhz) bands and millimeter wave (for example, 60GHz) bands.

The storage unit 10-30 may store data such as basic programs for operation of the UE, application programs, and configuration information. Particularly, the storage unit 10-30 may store information regarding a second access node configured to perform wireless communication by using a second radio access technology. In addition, the storage unit 10-30 may provide the stored data at the request of the controller 10-40.

The controller 10-40 may control overall operations of the UE. For example, the controller 10-40 may transmit/receive signals through the baseband processor 10-20 and the RF processor 10-10. In addition, the controller 10-40 may record and read data in the storage unit 10-40. To this end, the controller 10-40 may include at least one processor. For example, the controller 10-40 may include a communication processor (CP) configured to perform control for communication, and an application processor (AP) configured to control upper layers such as application programs.

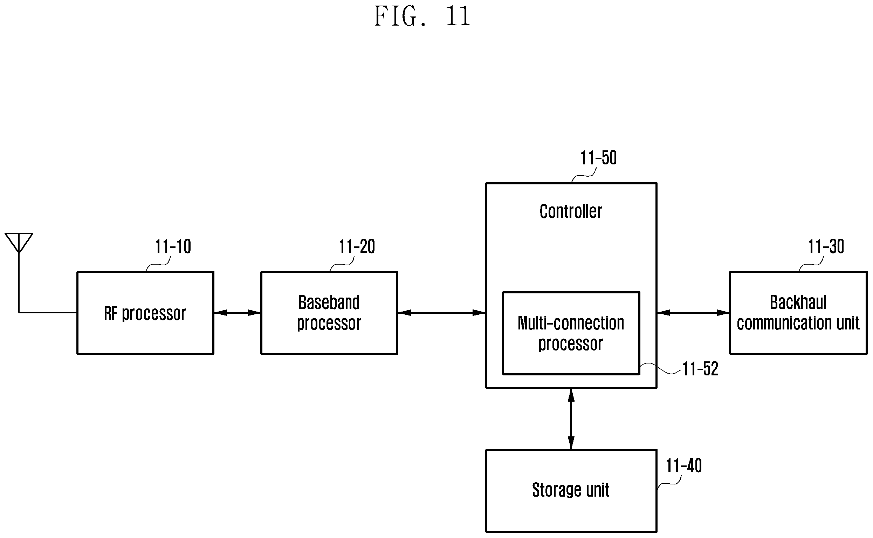

FIG. 11 is a block diagram illustrating the structure of a gNB according to an embodiment of the disclosure.

Referring to FIG. 11, the gNB may include an RF processor 11-10, a baseband processor 11-20, a backhaul communication unit 11-30, a storage unit 11-40, and a controller 11-50.

The RF processor 11-10 may perform functions for transmitting/receiving signals through a radio channel, such as signal band conversion and amplification. That is, the RF processor 11-10 may up-convert a baseband signal provided from the baseband processor 11-20 to an RF band signal, may transmit the same through an antenna, and may down-convert an RF band signal received through the antenna to a baseband signal. For example, the RF processor 11-10 may include a transmission filter, a reception filter, an amplifier, a mixer, an oscillator, a DAC, and an ADC. Although only one antenna is illustrated in FIG. 11, the first access node may include multiple antennas. In addition, the RF processor 11-10 may include multiple RF chains. Furthermore, the RF processor 11-10 may perform beamforming. For the beamforming, the RF processor 11-10 may adjust the phase and magnitude of signals transmitted/received through multiple antennas or antenna elements, respectively. The RF processor may transmit one or more layers to perform a downward MIMO operation.

The baseband processor 11-20 may perform functions of conversion between baseband signals and bitstrings according to the physical layer specifications of first radio access technology. For example, during data transmission, the baseband processor 11-20 may encode and modulate a transmitted bitstring to generate complex symbols. In addition, during data reception, the baseband processor 11-20 may demodulate and decode a baseband signal provided from the RF processor 11-10 to restore a received bitstring. For example, when following the OFDM scheme, during data transmission, the baseband processor 11-20 may encode and modulate a transmitted bitstring to generate complex symbols, may map the complex symbols to subcarriers, and may configure OFDM symbols through IFFT operation and CP insertion. In addition, during data reception, the baseband processor 11-20 may split a baseband signal provided from the RF processor 11-10 at the OFDM symbol level, may restore signals mapped to subcarriers through FFT operation, and may restore a received bitstring through demodulation and decoding. The baseband processor 11-20 and the RF processor 11-10 transmit and receive signals as described above. Therefore, the baseband processor 11-20 and the RF processor 11-10 may be referred to as a transmitter, a receiver, a transceiver, or a communication unit.

The backhaul communication unit 11-30 may provide an interface for communicating with other nodes in the network. That is, the backhaul communication unit 11-30 may convert bitstrings transmitted from the main gNB to other nodes (for example, auxiliary gNB, core network) to physical signals, and may convert physical signals received from the other nodes to bitstrings.

The storage unit 11-40 may store data such as basic programs for operation of the main gNB, application programs, and configuration information. Particularly, the storage unit 11-40 may store information regarding a bearer allocated to a connected UE, a measurement result reported from the connected UE, and the like. In addition, the storage unit 11-40 may store information serving as a reference to determine whether to provide multi-connection to a UE or to suspend the same. In addition, the storage unit 11-40 may provide the stored data at the request of the controller 11-50.

The controller 11-50 controls overall operations of the main gNB. For example, the controller 11-50 transmits/receives signals through the baseband processor 11-20 and the RF processor 11-10 or through the backhaul communication unit 11-30. In addition, the controller 11-50 records and reads data in the storage unit 11-40. To this end, the controller 11-50 may include at least one processor.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The message names and IE names included in the detailed description of the disclosure are merely an example, and other names having identical functions may be used as message and IE names.

## Claims

1. A method performed by a terminal in a wireless communication system, the method comprising:
receiving a radio resource control (RRC) release message related to an RRC inactive state, including sounding reference signal (SRS) configuration information for positioning provided in a pre-configured type;
identifying an event requiring activation of the SRS configuration information for positioning; and
transmitting an RRC resume request message, to a base station configured to operate a cell belonging to a validity area for the SRS configuration information for positioning.

2. The method of claim 1, wherein the RRC resume request message includes resume cause information indicating that activation of an SRS for positioning is requested.

3. The method of claim 1, wherein the SRS configuration information for positioning includes resource information for SRS transmission, and
wherein the validity area is configured based on a list of cell identifiers for which the SRS configuration information for positioning is valid.

4. The method of claim 1, wherein the event is identified based on a configured period or a triggered location.

5. A method performed by a base station in a wireless communication system, the method comprising:
transmitting a radio resource control (RRC) release message related to an RRC inactive state, including sounding reference signal (SRS) configuration information for positioning provided in a pre-configured type; and
in case that an event requiring activation of the SRS configuration information for positioning occurs to a terminal, and in case that the base station is configured to operate a cell belonging to a validity area for the SRS configuration information for positioning, receiving an RRC resume request message from the terminal.

6. The method of claim 5, wherein the RRC resume request message includes resume cause information indicating that activation of an SRS for positioning is requested.

7. The method of claim 5, wherein the SRS configuration information for positioning includes resource information for SRS transmission, and
wherein the validity area is configured based on a list of cell identifiers for which the SRS configuration information for positioning is valid.

8. The method of claim 5, wherein the event occurs based on a configured period or a triggered location.

9. A terminal in a wireless communication system, the terminal comprising:
a transceiver; and
a controller coupled to the transceiver,
wherein the controller is configured to:
receive, via the transceiver, a radio resource control (RRC) release message related to an RRC inactive state, including sounding reference signal (SRS) configuration information for positioning provided in a pre-configured type;
identify an event requiring activation of the SRS configuration information for positioning; and
transmit, via the transceiver, an RRC resume request message to a base station configured to operate a cell belonging to a validity area for the SRS configuration information for positioning.

10. The terminal of claim 9, wherein the RRC resume request message includes resume cause information indicating that activation of an SRS for positioning is requested.

11. The terminal of claim 9, wherein the SRS configuration information for positioning comprises resource information for SRS transmission, and
wherein the validity area is configured based on a list of cell identifiers for which the SRS configuration information for positioning is valid.

12. The terminal of claim 9, wherein the event is identified based on a configured period or a triggered location.

13. A base station in a wireless communication system, the base station comprising:
a transceiver; and
a controller coupled to the transceiver,
wherein the controller is configured to:
transmit, via the transceiver, a radio resource control (RRC) release message related to an RRC inactive state, including sounding reference signal (SRS) configuration information for positioning provided in a pre-configured type; and
in case that an event requiring activation of the SRS configuration information for positioning occurs to a terminal, and in case that the base station is configured to operate a cell belonging to a validity area regarding the SRS configuration information for positioning, receive, via the transceiver an RRC resume request message from the terminal.

14. The base station of claim 13, wherein the RRC resume request message includes resume cause information indicating that activation of an SRS for positioning is requested.

15. The base station of claim 13, wherein the SRS configuration information for positioning comprises resource information for SRS transmission,
wherein the validity area is configured based on a list of cell identifiers for which the SRS configuration information for positioning is valid, and
wherein the event occurs based on a configured period or a triggered location.
